# EUROPÄISCHE PATENTSCHRIFT

(11) **EP 1 372 312 B1**
(45) Veröffentlichungstag und Bekanntmachung des Hinweises auf die Patenterteilung: **02.01.2008**
(21) Anmeldenummer: 02360174.3
(22) Anmeldetag: 13.06.2002
(51) Int. Cl.: H04L 29/06, H04L 12/56

(54) **Zuteilung von Übertragungskapazität eines gemeinsamen Mediums in einem Mehrpunkt-zu-Punkt-Netzwerk**
Allocating transmission capacity of a shared medium in a multipoint to point network
Attribution de la capacité de transmission d'un medium partagé dans un réseau multipoint à point

(43) Veröffentlichungstag der Anmeldung: 17.12.2003
(73) Patentinhaber: Alcatel Lucent, 75008 Paris (FR)
(72) Erfinder: Wahl, Stefan, 71701 Schwieberdingen (DE)
(74) Vertreter: Schmidt, Werner Karl

(56) Entgegenhaltungen:
- WO-A-00/42789
- WO-A-97/36405
- WO-A-99/48310
- DE-A- 19 939 366
- RAYCHAUDHURI D ET AL: "WATMNET: A PROTOTYPE WIRELESS ATM SYSTEM FOR MULTIMEDIA PERSONAL COMMUNICATION" 1. Januar 1997 (1997-01-01) , IEEE JOURNAL ON SELECTED AREAS IN COMMUNICATIONS, IEEE INC. NEW YORK, US, VOL. 15, NR. 1, PAGE(S) 83-95 XP000637401 ISSN: 0733-8716 * Seite 89, linke Spalte - Seite 90, linke Spalte *
- MOHANTY B ET AL: "Some resource control problems in CDMA wireless communication systems" , DECISION AND CONTROL, 1995., PROCEEDINGS OF THE 34TH IEEE CONFERENCE ON NEW ORLEANS, LA, USA 13-15 DEC. 1995, NEW YORK, NY, USA,IEEE, US, PAGE(S) 1953-1957 XP010152482 ISBN: 0-7803-2685-7 * das ganze Dokument *
- GUOSONG CHU; DENG WANG; SHUNLIANG MEI: 'A QoS architecture for the MAC protocol of IEEE 802.16 BWA system' CONFERENCE PROCEEDINGS ARTICLE Bd. 1, 29 Juni 2002, PISCATAWAY, NJ, USA, IEEE, Seiten 435 - 439, XP010632295

## Beschreibung

Die vorliegende Erfindung betrifft ein Verfahren zur Zuteilung von Übertragungskapazität eines gemeinsamen Mediums bei einem Mehrpunkt-zu-Punkt-Netzwerk, bei dem das gemeinsame Medium für mehrere Terminierungsvorrichtungen zur Übertragung von Daten zu einem Punkt hin vorgesehen ist und ein netzseitiger Medium-Zugangscontroller zur Zuteilung von Übertragungskapazität des Mediums an die Terminierungsvorrichtungen vorgesehen ist. Die Erfindung betrifft ferner ein Mehrpunkt-zu-Punkt-Netzwerk, einen Medium-Zugangscontroller, ein Kontrollmodul, eine Terminierungsvorrichtung und ein Terminierungsmodul hierfür.

Bei einem Mehrpunkt-zu-Punkt-Netzwerk werden Daten in einer Downlink-Richtung von einem zentralen Punkt zu mehreren Punkten, z.B. zu Terminierungsvorrichtungen übertragen und/oder in einer Uplink-Richtung von mehreren Punkten zu dem zentralen Punkt. Dabei kann ein gemeinsames Medium für mehrere Terminierungsvorrichtungen zur Übertragung von Daten zu dem zentralen Punkt hin und/oder in umgekehrter Richtung vorgesehen sein. Das gemeinsame Medium (engl. "shared medium"), z.B. ein Funkkanal oder eine gemeinsame Datenleitung, wird von mehreren Teilnehmern genutzt. Ein typisches Beispiel für ein Mehrpunkt-zu-Punkt-Netzwerk ist ein Zugangsnetz, z.B. ein HFC-Netz (HFC = Hybrid-Fibre-Coax) oder eine UMTS-Funkzelle (UMTS = Universal Mobile Telecommunications System). In der so genannten Downlink-Richtung ist die Nutzung eines gemeinsamen Mediums vergleichsweise unproblematisch. Die Terminierungsvorrichtungen empfangen die auf dem Medium gesendeten Daten und werten sie insoweit aus, wie sie für sie relevant sind. In der umgekehrten Richtung hingegen, der "Uplink-Richtung", ist dies wesentlich schwieriger. Die auf dem Medium vorhandene Übertragungskapazität muss auf die Terminierungsvorrichtungen nach einem vorbestimmten Schema aufgeteilt werden, damit es nicht zu Sendekollisionen auf dem Medium kommt, wenn mehrere Terminierungsvorrichtungen gleichzeitig eine gemeinsame Uplink-Übertragungskapazität nutzen wollen. Bei der Verteilung der Übertragungskapazität sollten jedenfalls die aktuellen Übertragungsanforderungen der Terminierungsvorrichtungen so gut wie möglich berücksichtigt werden.

Eine Möglichkeit für eine Zuteilung der Uplink-Übertragungskapazität besteht darin, dass den Terminierungsvorrichtung für unterschiedliche Qualitäten von zu übertragenden Daten jeweils vorbestimmte Übertragungskapazitäten zur Verfügung gestellt werden. Die Daten werden durch die Terminierungsvorrichtungen in Dienstqualitätsklassen eingruppiert, die auch QoS-Klassen (QoS = Quality of Service = Dienstqualität) genannt werden. Die Dienstqualitätsklassen entsprechen der für die jeweils zu übertragenden Daten erforderlichen Dienstqualität, d.h. es gibt beispielsweise Daten, die einer höheren Dienstqualität zugeordnet werden, z.B. Echtzeit-Daten, und Daten, für die eine geringere Dienstqualität ausreicht, z.B. nicht zeitkritische Datenanforderungen an das Internet. Eine Terminierungsvorrichtung gruppiert Daten anhand vorgegebener Kriterien in die Dienstqualitätsklassen ein.

Zur Übertragung der Daten jeder Datenklasse stellt ein netzseitiger Medium-Zugangscontroller (engl. Medium Access Controller =MAC) eine vorbestimmte Übertragungskapazität auf dem jeweiligen Shared Medium für die Terminierungsvorrichtungen bereit. Dabei teilt der Medium-Zugangscontroller jeder Terminierungsvorrichtung z.B. Zeitschlitze zu, in denen die Terminierungsvorrichtung Daten einer ersten Dienstqualitätsklasse übertragen darf, und Zeitschlitze, in denen die Terminierungsvorrichtung Daten einer zweiten, der ersten Dienstqualitätsklasse untergeordneten Dienstqualitätsklasse übertragen darf. Die Terminierungsvorrichtungen senden die Daten der Dienstqualitätsklassen unter Berücksichtigung der jeweils dafür zugeteilten Übertragungskapazität auf dem gemeinsamen Medium.

Der Artikel RAYCHAUDHURI D ET AL: "WATMnet: A Prototype Wireless ATM System for Multimedia Personal Communication" (IEEE JOURNAL ON SELECTED AREAS INCOMMUNICATIONS, IEEE INC. NEW YORK, US, VOL. 15, NR. 1, PAGES 83-95) behandelt die dynamische Allozierung von Übertragungskapazität auf einem drahtlosen ATM-System. Sowohl in der Basisstation als auch in der abgesetzten Station sind jeweils Medium-Zugrangscontroller (MAC) vorgesehen, die für Daten unterschiedlicher Dienstklassen (ABR, UBR, CBR, VBR) Übertragungskapazität annotieren. Mit Hilfe eines Nutzungsparameters wird für eine untergeordnete Datenklasse VBR (Variable Bit Rate) Übertragungskapazität bereitgestellt.

Aus der WO 00/42789 geht ein Mobilfunksystem hervor, bei dem mehrere mobile Geräte Daten an eine Base Transceiver Station (BTS) senden. Die Daten werden von den Transceivern (TRX) empfangen und decodiert. Die Transceiver senden die Daten dann paketweise zu einem internen Router, wobei in jedem Paket ein Prioritätsindex enthalten ist. Entsprechend der jeweiligen Priorität sendet der Router die Daten unverzüglich oder verzögert ins Kernnetz.

Probleme bereiten Daten, die mit einem vorgegebenen Kriterium für eine oder mehrere Dienstqualitätsklassen nicht konform sind. Diese Daten können möglicherweise keiner Dienstqualitätsklasse zugeordnet werden. Ferner können Daten als "nicht-konform" eingestuft werden, wenn sie innerhalb der für die jeweilige Dienstqualitätsklasse vorgesehenen Übertragungskapazität nicht übertragen werden können. Diese nicht konformen Daten werden z.B. sofort verworfen (engl. drop), zum Verwerfen vorbereitet oder in eine niederwertigere Dienstqualitätsklasse eingruppiert. Daher kann es zu unerwünschten teilnehmerseitigen Datenverlusten und/oder zu verzögerter Übertragung von solchen nicht-konformen Daten kommen.

Es ist daher Aufgabe der Erfindung, die Zuteilung von Übertragungskapazität eines gemeinsamen Mediums bei einem Mehrpunkt-zu-Punkt-Netzwerk zu verbessern, bei dem das gemeinsame Medium für mehrere Terminierungsvorrichtungen zur Übertragung von Daten zu einem Punkt hin vorgesehen ist und ein netzseitiger Medium-Zugangscontroller zur Zuteilung von Übertragungskapazität des Mediums an die Terminierungsvorrichtungen vorgesehen ist.

Diese Aufgabe wird durch ein Verfahren gemäß der technischen Lehre des Anspruchs 1 gelöst. Zur Lösung der Aufgabe sind ferner ein Medium-Zugangscontroller und eine Terminierungsvorrichtung gemäß weiterer unabhängiger Ansprüche vorgesehen.

Der Erfindung liegt dabei der Gedanke zugrunde, dass mindestens eine mit dem gemeinsamen Medium verbundene Terminierungsvorrichtung die von der Terminierungsvorrichtung jeweils auf dem Medium zu übertragenden Daten in eine erste Datenklasse eingruppiert, wenn die Daten mit einem vorgegebenen Kriterium konform sind. Nicht mit dem Kriterium konforme Daten gruppiert die jeweilige Terminierungsvorrichtung in eine zweite Datenklasse ein. Die erste Datenklasse entspricht beispielsweise einer vorbestimmten Dienstqualität. Die Daten der zweiten Datenklasse sind mit dieser Dienstqualität nicht konform. Es ist z.B. möglich, dass die Terminierungsvorrichtung die Daten der zweiten Datenklasse keiner Dienstqualität exakt zuordnen kann, aber dass die Daten zwar mit der ersten Datenklasse nicht konform sind, aber der Dienstqualität der ersten Datenklasse am nächsten kommen. Ferner kann durch die Daten der ersten Datenklasse eine vorbestimmte Übertragungskapazität bereits ausgelastet sein, die für die Dienstqualität auf dem gemeinsamen Medium für die Terminierungsvorrichtung reserviert ist. Weitere Daten, die zusätzlich in der Dienstqualität zu übertragen sind, aber aufgrund der bereits ausgelasteten Übertragungskapazität nicht übertragen werden können, werden als "nicht-konforme" Daten in die zweite Datenklasse eingruppiert.

Es ist auch möglich, dass auch bei weiteren Dienstqualitäten in der erfindungsgemäßen Weise vorgegangen wird. Die erfindungsgemäße Terminierungsvorrichtung gruppiert die zu übertragenden Daten in Bezug auf diese Dienstqualitäten jeweils in die beiden Datenklassen für konforme und nicht konforme Daten ein.

Vorzugsweise gruppieren alle, zumindest aber mehrere, mit dem gemeinsamen Medium verbundenen Terminierungsvorrichtungen ihre jeweils über das Medium zu versendenen Daten in der erfindungsgemäßen Weise pro Dienstqualität, zumindest aber für eine Dienstqualität, jeweils in eine erste und eine zweite Datenklasse ein.

Der Medium-Zugangscontroller teilt den Terminierungsvorrichtungen die Übertragungskapazität des Mediums in Richtung zu einem Punkt hin, nämlich in der so genannten Uplink-Richtung oder Upstream-Richtung, zu. Es versteht sich, dass auf dem gemeinsamen Medium prinzipiell auch Daten zu den Terminierungsvorrichtungen hin, also in der so genannten Downlink-Richtung oder Downstream-Richtung, übertragen werden können.

Der Medium-Zugangscontroller teilt die für die Daten der ersten Datenklasse erforderliche Übertragungskapazität zu, er gewährt (engl.: grant) sozusagen diese Übertragungskapazität. Die Terminierungsvorrichtung sendet die in die erste Datenklasse eingruppierten Daten unter Berücksichtigung der zugeteilten Übertragungskapazität.

Anders als bei der bekannten Vorgehensweise werden jedoch die mit der ersten Datenklasse nicht konformen Daten, nämlich die Daten der zweiten Datenklasse, nicht einfach gelöscht oder ohne Weiteres mit einer niederwertigeren Dienstqualität versendet. Vielmehr gibt der Medium-Zugangscontroller nicht genutzte Übertragungskapazität auf dem gemeinsamen Medium zur Übertragung der Daten der zweiten Datenklasse zumindest teilweise - vorzugsweise jedoch vollständig - frei. Die jeweilige Terminierungsvorrichtung überträgt die Daten der zweiten Datenklasse im Rahmen der dafür freigegebenen Übertragungskapazität auf dem gemeinsamen Medium.

Bei der nicht genutzten Übertragungskapazität kann es ich beispielsweise um eine Übertragungskapazität handeln, die für die Daten der ersten Datenklasse einer einzigen, individuellen Dienstqualität reserviert und nicht vollständig ausgelastet ist. Vorzugsweise sind jedoch mehrere Dienstqualitäten mit jeweils einer ersten und einer zweiten Datenklasse vorgesehen. Der Medium-Zugangscontroller ermittelt dann, in welchem Umfang die Übertragungskapazität zur Übertragung der Daten in den jeweiligen ersten Datenklassen der unterschiedlichen Dienstqualitäten erforderlich ist. Wenn dann noch Übertragungskapazität auf dem gemeinsamen Medium vorhanden ist, gibt der Medium-Zugangscontroller zur Übertragung von Daten der zweiten Datenklassen frei.

Der Medium-Zugangscontroller kann die ungenutzte Übertragungskapazität auf Dienstqualitäten bezogen freigeben. Dabei ist beispielsweise ein Priorisierung höherwertigerer Dienstqualitäten möglich. Das heißt, dass der Medium-Zugangscontroller die ungenutzte Übertragungskapazität vorrangig zur Übertragung von Daten einer zweiten Datenklasse einer höherwertigeren Dienstqualität freigibt. Es ist auch möglich, dass der Medium-Zugangscontroller es der Terminierungsvorrichtung überlässt, ob sie Daten einer höheren oder einer niedrigeren Dienstqualität im Rahmen der freigegebenen Übertragungskapazität versendet. Die Freigabe wäre in diesem Fall sozusagen pauschal. Beispielsweise kann die Terminierungsvorrichtung dann entscheiden, ob sie Daten einer zweiten Datenklasse einer höheren Dienstqualität oder stattdessen Daten einer zweiten Datenklasse einer niedrigeren Dienstqualität, z.B. so genannte Best-Effort-Daten, versendet.

Es ist möglich, dass sich das "Nicht-Nutzen" von Übertragungskapazität einer Datenklasse jeweils individuell auf eine Terminierungsvorrichtung bezieht, d.h., dass eine Terminierungsvorrichtung die von ihr selbst jeweils für eine oder mehrere erste Datenklassen nicht genutzte Übertragungskapazität für eine oder mehrere zweite Datenklassen nutzen darf. Es ist allerdings bevorzugt, dass das der Medium-Zugangscontroller alle mit dem gemeinsamen Medium verbundenen Terminierungsvorrichtungen berücksichtigt und Übertragungskapazität zur Übertragung von Daten der zweiten Datenklassen freigibt, wenn die freigegebene Übertragungskapazität von keiner der Terminierungsvorrichtungen zur Übertragung von Daten in den ersten Datenklassen benötigt wird.

Es versteht sich, dass der Medium-Zugangscontroller die Übertragungskapazitäten für die beiden Datenklassen auch in einem Schritt, z.B. mittels einer einzigen Freigabenachricht, zuteilen bzw. freigeben kann. Ebenso kann die Terminierungsvorrichtung die Daten der beiden Datenklassen miteinander kombiniert, z.B. in einer einzigen Nachricht, versenden.

Die Übertragungskapazität des gemeinsamen Mediums wird durch die Erfindung optimal genutzt. Dies ist sowohl für den Netzbetreiber vorteilhaft als auch für die Teilnehmer, die die mit dem Medium verbundenen Terminierungsvorrichtungen nutzen. Andererseits ist gewährleistet, dass für die Daten der ersten Datenklasse in ausreichendem Maße Übertragungskapazität bereitgestellt wird. Die Daten der zweiten Datenklasse werden erforderlichenfalls beispielsweise gelöscht oder mit einer niedrigeren Dienstqualität versendet. Eine Überlastsituation des gemeinsamen Mediums kann so trotz der erhöhten Auslastung des Mediums vermieden werden.

Der Medium-Zugangscontroller sorgt dafür, dass eine Terminierungsvorrichtung die Daten der zweiten Datenklasse(n) möglichst vollständig im Rahmen bislang ungenutzter Übertragungskapazität versenden kann. Allerdings können Situationen auftreten, bei denen nicht alle Daten der zweiten Datenklasse(n) versendet werden können. In einem solchen Szenario versendet der Medium-Zugangscontroller Löschbefehle für zumindest einen Teil der in die zweite Datenklasse eingruppierten Daten an die Terminierungsvorrichtung(en).

Der Begriff "Terminierungsvorrichtung" im Sinne der Erfindung muss in einem weiten Sinne verstanden werden, nämlich als eine Einrichtung zur Terminierung eines durch den Medium-Zugangscontroller kontrollierten gemeinsamen Übertragungswegs. An eine erfindungsgemäße Terminierungsvorrichtung können weitere Telekommunikationseinrichtungen angeschlossen sein, z.B. Endgeräte oder dergleichen, die über die erfindungsgemäße Terminierungsvorrichtung Zugang zu dem Übertragungsweg erhalten. Beispielsweise kann eine erfindungsgemäße Terminierungsvorrichtung eine so genannte Set-Top-Box zum Anschluss eines Fernsehgerätes sein. Eine erfindungsgemäße Terminierungsvorrichtung kann beispielsweise auch eine so genannte "Access Network Termination" sein. Eine erfindungsgemäße Terminierungsvorrichtung kann jedoch auch einen integralen Bestandteil eines Endgeräts bilden. Eine erfindungsgemäße Terminierungsvorrichtung kann auch als Endgerät ausgestaltet sein.

Der Medium-Zugangscontroller kann z.B. einen Bestandteil einer netzseitigen Netzwerkeinrichtung zur Terminierung eines Übertragungswegs bilden, der das gemeinsame Medium enthält. Es ist auch möglich, dass der Medium-Zugangscontroller eine solche Netzwerkeinrichtung insgesamt bildet.

Das Mehrpunkt-zu-Punkt-Netzwerk enthält oder ist beispielsweise ein Zugangsnetzwerk, insbesondere ein Hybrid-Fiber-Coax-Netzwerk und/oder ein Universal Mobile Telecommunications System und/oder ein drahtloses LAN (= Local Area Network) und/oder ein LMDS (= Local Multipoint Distributive System). Das erfindungsgemäße Verfahren wird vorzugsweise in Uplink-Richtung angewendet.

Weitere vorteilhafte Ausgestaltungen und Wirkungen der Erfindung ergeben sich aus den abhängigen Ansprüchen und der Beschreibung.

Vorzugsweise sendet die Terminierungsvorrichtung eine Information über die auf dem Medium zu übertragenden Daten der ersten und/oder der zweiten Datenklasse an den Medium-Zugangscontroller. Die Information kann beispielsweise die für die Daten erforderliche Dienstqualität betreffen. Der Medium-Zugangscontroller kann in Abhängigkeit von der Information die für die erste Datenklasse vorhandene Übertragungskapazität zur Übertragung der Daten der ersten und der zweiten Datenklasse optimal zuteilen. Die Information wird von den Terminierungsvorrichtungen beispielsweise spontan, z.B. als Huckepack-Information (engl.: piggy back) zu Nutzdaten (engl.: payload), gesendet. Es ist auch möglich, dass der Medium-Zugangscontroller die Information bei den Terminierungsvorrichtungen abfragt, z.B. im Rahmen eines Polling-Verfahrens. Auch dann können die Terminierungsvorrichtungen prinzipiell ihre Anworten als Huckepack-Information zu Nutzdaten übermitteln.

Es versteht sich, dass im Grunde genommen auch z.B. eine Information über die auf dem Medium zu übertragenden Daten der ersten Datenklasse ausreichend ist. Der Medium-Zugangscontroller kann dann beispielsweise eine für die erste Datenklasse aktuell nicht erforderliche, jedoch auf dem Medium vorhandene Übertragungskapazität ermitteln und z.B. jeweils einen Anteil an dieser ungenutzten Übertragungskapazität den Terminierungsvorrichtungen zum Übertragen von Daten der zweiten Datenklasse pauschal freigeben. Diese Freigabe kann unabhängig davon sein, ob die jeweilige Terminierungsvorrichtung aktuell Daten in der zweiten Datenklasse zu versenden hat.

Die Information kann auch beispielsweise die Menge und/oder den Inhalt der jeweils in der ersten bzw. der zweiten Datenklasse zu übertragenden Daten betreffen. Anhand der Mengen-Information kann der Medium-Zugangscontroller beispielsweise eine Terminierungsvorrichtung dazu anweisen, einen Teil der Daten der zweiten Datenklasse zu löschen und einen anderen Teil im Rahmen von für die erste Datenklasse vorhandener, jedoch aktuell nicht genutzter Übertragungskapazität zu versenden.

Vorzugsweise ist die Information in einer an den Medium-Zugangscontroller übermittelten Sendeanforderung enthalten. Mit der Sendeanforderung meldet eine Terminierungsvorrichtung sozusagen ihren Bedarf an Übertragungskapazität an. Dabei gibt die Terminierungsvorrichtung beispielsweise jeweils die Menge und/oder Qualität der in der ersten Datenklasse und in der zweiten Datenklasse zum Versenden anstehenden Daten an.

Wie bereits erläutert, kann der Medium-Zugangscontroller die für die erste Datenklasse vorhandene Übertragungskapazität jeweils bezogen auf eine einzelne Terminierungsvorrichtung optimal für die erste Datenklasse und für die zweite Datenklasse zuteilen. Vorteilhafterweise jedoch gibt der Medium-Zugangscontroller ungenutzte Übertragungskapazität zur Übertragung der Daten der zweiten Datenklasse in Abhängigkeit von der Menge der bei allen mit dem Medium verbundenen Terminierungsvorrichtungen - oder jedenfalls bei einer Gruppe der mit dem Medium verbundenen Terminierungsvorrichtungen - jeweils in den ersten Datenklassen zu versendenden Daten frei. Der Medium-Zugangscontroller erhält z.B. zunächst von allen bzw. von der Gruppe der über das Medium sendenden Terminierungsvorrichtungen Informationen über die insgesamt auf dem Medium in beiden Datenklassen zu versendenden Daten. Dann teilt der Medium-Zugangscontroller die für die ersten Datenklassen vorhandene Übertragungskapazität vorrangig für die Daten der ersten Datenklassen zu. Sofern dann noch Übertragungskapazität vorhanden ist, wird diese auf die Terminierungsvorrichtungen zum Versenden der Daten der zweiten Datenklassen, beispielsweise gleichmäßig, verteilt.

Besonders bevorzugt ist eine vorausschauende Betriebsweise bei der Ausführung der Erfindung: die auf dem Medium verfügbaren Übertragungskapazität wird jeweils für eine Zuteilungsperiode im Voraus verteilt. Die Terminierungsvorrichtungen melden die von ihnen jeweils in den beiden Datenklassen zu versendenden Daten z.B. für eine Zuteilungsperiode im Voraus an. Dazu senden die Terminierungsvorrichtungen beispielsweise Inband-Signalisierungsnachrichten und/oder Outband-Signalisierungsnachrichten. Der Medium-Zugangscontroller teilt den Terminierungsvorrichtungen dann die Übertragungskapazität für diese nächste Zuteilungsperiode zu.

Vorzugsweise reihen die Terminierungsvorrichtungen die auf dem Medium zu übertragenden Daten der ersten Datenklasse in eine erste Warteschlange und die Daten der zweiten Datenklasse in eine zweite Warteschlange ein. Die Daten werden z.B. als Zellen oder Pakete segmentiert in die Warteschlangen eingestellt. Wenn eine Terminierungsvorrichtungen die Daten jeweils unterschiedlichen Dienstqualitäten zuordnet, können in jeder Dienstqualität z.B. jeweils zwei Warteschlangen vorgesehen sein: jeweils eine erste Warteschlange für Daten in der ersten Datenklasse und eine zweite Warteschlange für Daten der zweiten Datenklasse.

Prinzipiell kann die auf dem gemeinsamen Medium vorhandene Übertragungskapazität in beliebiger Weise aufgeteilt werden, z.B. in Sendekanäle, Sendecodes, Sendefrequenzen oder dergleichen. Als Beispiele seien z.B. Frequency Division Multiple Access (FDMA) und Code Division Multiple Access (CDMA) genannt. Vorzugsweise wird die Übertragungskapazität des Mediums in Zeitschlitze eingeteilt, z.B. mittels Time Division Access (TDA), Time Division Multiple Access (TDMA) etc. Die Übertragungskapazität wird in diese Zeitschlitze aufgeteilt und zur Übertragung der Daten der ersten und der zweiten Datenklasse zugeteilt.

Zweckmäßigerweise ist die zweite Datenklasse eine der ersten Datenklasse untergeordnete Datenklasse. Die Daten der ersten Datenklasse werden vorzugsweise vorrangig versendet.

Im Folgenden wird die Erfindung anhand von Ausführungsbeispielen unter Zuhilfenahme der Figuren dargestellt. Es zeigen
- Figur 1: ein erfindungsgemäßes Telekommunikationsnetz zur Ausführung des erfindungsgemäßen Verfahrens, mit erfindungsgemäßen Terminierungsvorrichtungen sowie einem erfindungsgemäßen Medium-Zugangscontroller zur Zuteilung von Übertragungskapazität eines drahtlosen gemeinsamen Mediums,
- Figur 2: eine Variante des Telekommunikationsnetzes gemäß Figur 1, wobei allerdings eine Übertragungskapazität eines leitungsgebundenen gemeinsamen Mediums zugeteilt wird,
- Figur 3: eine schematische Darstellung eines erfindungsgemäßen Medium-Zugangscontrollers sowie einer mit diesem interagierenden erfindungsgemäßen Terminierungsvorrichtung,
- Figur 4: einen schematischen Aufbau der Terminierungsvorrichtung gemäß Figur 3,
- Figur 5: einen schematischen Aufbau des Medium-Zugangscontrollers gemäß Figur 3,
- Figur 6: einen Ablauf einer Kommunikation zwischen dem Medium-Zugangscontroller und der Terminierungsvorrichtung gemäß Figur 3, und
- Figur 7: einen zu dem in Figur 6 veranschaulichten Ablauf alternativen Ablauf einer Kommunikation zwischen dem Medium-Zugangscontroller und der Terminierungsvorrichtung gemäß Figur 3.

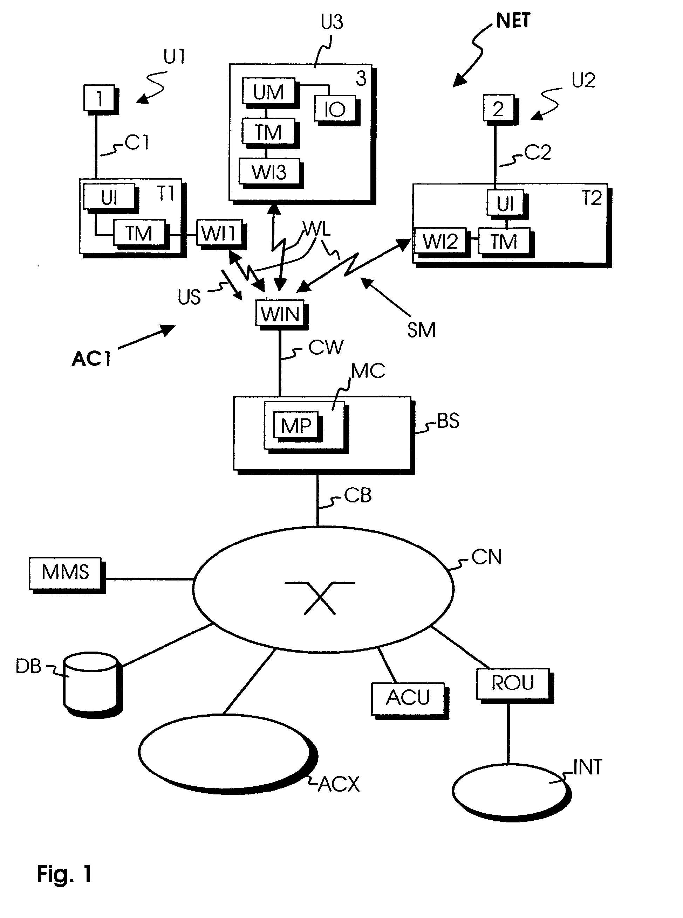

In Figur 1 ist eine beispielhafte Anordnung dargestellt, mit der die Erfindung ausgeführt werden kann. Figur 1 zeigt ein Telekommunikationsnetz NET, das ein erfindungsgemäßes Zugangsnetzwerk AC1 enthält. Das Zugangsnetzwerk AC1 weist zumindest teilweise eine Mehrpunkt-zu-Punkt-Struktur auf. Über das Zugangsnetzwerk AC1 erhalten beispielhaft dargestellte Endgeräte 1 bis 3 Zugang zu einem Kernnetz CN des Netzwerks NET. Das Kernnetz CN enthält beispielsweise ein ATM-Netzwerk (ATM = Asychronous Transfer Mode) und/oder ein SDH-Netzwerk (SDH = Synchronous Digital Hierarchy). Vorzugsweise jedenfalls garantiert das Kernnetz CN mindestens eine vorbestimmte Dienstqualität (QoS = Quality of Service). Das Kernnetz CN enthält vorliegend z.B. einen ATM-Knoten oder wird durch einen ATM-Knoten gebildet.

Von einem mit dem Kernnetz CN über eine Verbindung CM verbundenen Multimediaserver MMS können die Endgeräte 1 bis 3 Multimedia-Daten empfangen, z.B. Videofilme oder dergleichen. Ferner können die Endgeräte 1 bis 3 Daten von einer mit dem Kernnetz CN verbundenen Datenbank DB abfragen. Über mit dem das Kernnetz CN verbundenen Router ROU erhalten die Endgeräte 1 bis 3 Zugang zum Internet INT oder einem sonstigen, mit dem Telekommunikationsnetz NET verbundenen Netzwerk. Ferner können mit dem Kernnetz CN weitere Zugangsnetzwerke ACX verbunden sein, beispielsweise ein HFR-Netzwerk (HFR = Hybrid Fibre Radio), ein symmetrisches oder asymmetrisches DSL-Netz (Digital Subscriber Line), ein drahtloses und/oder kabelgebundenes FTTH-Netz (Fibre to the Home) oder dergleichen. Eine Steuer- und Managementvorrichtung ACU (Access Control Unit) kontrolliert und managt die Zugangsnetzwerke ACX sowie das Zugangsnetzwerk AC1.

Beim Ausführungsbeispiel gemäß Figur 1 ist das Zugangsnetzwerk AC1 ein drahtloses Zugangsnetzwerk. Das Zugangsnetzwerk AC1 ist z.B. ein LMDS (= Local Multipoint Distributive/Distribution Service), ein wireless LAN (Local Area Network), ein UMTS-Netz (UMTS = Universal Mobile Telecommunications System) oder dergleichen. Das Zugangsnetzwerk AC1 sowie vorliegend auch die Zugangsnetzwerke ACX weisen in der so genannten Upstream-Richtung US (von den Endgeräten zum Kernnetz CN) gemeinsame Medien auf. Das Zugangsnetzwerk AC1 beispielsweise ein gemeinsames Medium SM. Auch in der so genannten Downstream-Richtung DS (vom Kernnetz CN zu den Endgeräten) kann ein gemeinsames Medium, beispielsweise ein so genannter Distribution Channel, vorgesehen sein. Es ist auch möglich, dass in Up- und Downstream-Richtung US, DS ein einziges gemeinsames Medium verwendet wird, z.B. das gemeinsame Medium SM. In der Downstream-Richtung DS und der Upstream-Richtung US werden beispielsweise Videodaten, Gesprächsdaten, Steuerdaten zum Abruf von Videodaten oder dergleichen übermittelt.

Zur Kontrolle der Datenübertragung auf dem Medium SM in Upstream-Richtung von den Endgeräten 1 bis 3 zum Kernnetz CN hin ist bei dem Zugangsnetzwerk AC1 ein erfindungsgemäßer Medium-Zugangscontroller MC vorgesehen, der vorliegend einen Bestandteil einer Basisstation BS bildet. Die wesentlichen Funktionen zur Kontrolle der Upstream-Übertragungskapazität des Mediums SM des Medium-Zugangscontrollers MC leistet ein erfindungsgemäßes, softwareorientiertes Kontrollmodul MP. Allerdings könnte der Medium-Zugangscontroller MC auch komplett in Hardware aufgebaut sein.

Die Basisstation BS ist über eine Verbindung CB mit dem Kennetz CN verbunden, auf der Daten beispielsweise in ATM-Zellen und/oder Synchronous Transport Modules (STM) in der SDH-Technik oder dergleichen übertragen werden. Über eine Verbindung CW ist die Basisstation BS mit einem Funk-Schnittstellenmodul WIN verbunden, über die die Basisstation BS drahtlos Daten an die Endgeräte 1 bis 3 senden kann und Daten von diesen empfangen kann. Die Endgeräte 1 bis 3 senden Daten in Upstream-Richtung US beispielsweise auf einem vorbestimmten gemeinsamen Funkkanal, der somit das gemeinsame Medium SM bildet. In Upstream-Richtung US werden Daten von mehreren Punkten, vorliegend den Terminierungsvorrichtungen T1, T2 und dem Endgerät 3, in Richtung eines Punktes, vorliegend der Basisstation BS, auf dem gemeinsamen Medium SM gesendet.

Den Endgeräten 1 und 2, bei denen es sich beispielsweise um Personal Computer, Telefone, Personal Digital Assistants etc. handelt, sind erfindungsgemäße Terminierungsvorrichtungen T1 und T2 zur Senden und Empfangen von Daten auf dem gemeinsamen Medium SM zugeordnet. Zwar könnten die Terminierungsvorrichtungen T1 und T2 prinzipiell als reine Hardwarelösungen ausgestaltet sein. Im Ausführungsbeispiel enthalten sie jedoch erfindungsgemäße Terminierungsmodule TM, deren Programmcode sie ausführen. Die Terminierungsvorrichtung T2 enthält integral eine Funk-Schnittstelle WI2 zur Kommunikation über das gemeinsame Medium SM. Mit der Terminierungsvorrichtung T1 ist ein als separates Modul ausgeführtes Funk-Schnittstellenmodul WI1 verbunden, die zum Aufbau einer Funk-Verbindung WL mit dem netzseitigen Funk-Schnittstellenmodul WIN und somit der Kommunikation über das gemeinsame Medium SM dient. Die Endgeräte 1 und 2 sind mit den Terminierungsvorrichtungen T1 und T2 über Verbindungen C1 und C2 verbunden, für die an den Terminierungsvorrichtungen T1 und T2 Benutzer-Schnittstellen UI vorgesehen sind. Die Benutzer-Schnittstellen UI unterstützen beispielsweise eine Kommunikation über Ethernet und/oder ATM oder dergleichen. Beispielsweise ist eine ATM-Kommunikation mit ca. 25 Mbit/s, 155 Mbit/s oder mehr vorgesehen. An die Terminierungsvorrichtungen T1 und T2 könnten neben den Endgeräten 1, 2 auch weitere, nicht dargestellte Endgeräte angeschlossen sein.

Das Endgerät 3 ist sozusagen eine integrierte Lösung: Es enthält ein erfindungsgemäßes, softwareorientiertes Terminierungsmodul TM sowie eine Funk-Schnittstelle WI3 zum Senden und Empfangen von Daten auf dem gemeinsamen Medium. Das Endgerät 3 bildet somit sozusagen eine erfindungsgemäße Terminierungsvorrichtung und wird im Folgenden teilweise auch als "Terminierungsvorrichtung 3" bezeichnet. Zudem enthält das Endgerät 3 Eingabe- und Ausgabemittel 10, beispielsweise eine Tastatur und eine Maus bzw. ein Display und einen Lautsprecher, an denen Bedienbefehle eingegeben werden können bzw die Daten ausgeben können. Zudem weist das Endgerät 3 Benutzer-Programmmodule auf, beispielsweise einen Browser UM für das Internet INT oder dergleichen.

Das Endgerät 1 und die Terminierungsvorrichtung T1 sowie die Funk-Schnittstelle WI1 sind beispielsweise einem Benutzer U1 zugeordnet und bilden dessen so genanntes Customer Premises Equipment (CPE). Das Endgerät 2 und die Terminierungsvorrichtung T2 gehören einem Benutzer U2 und das Endgerät 3 gehört einem Benutzer U3.

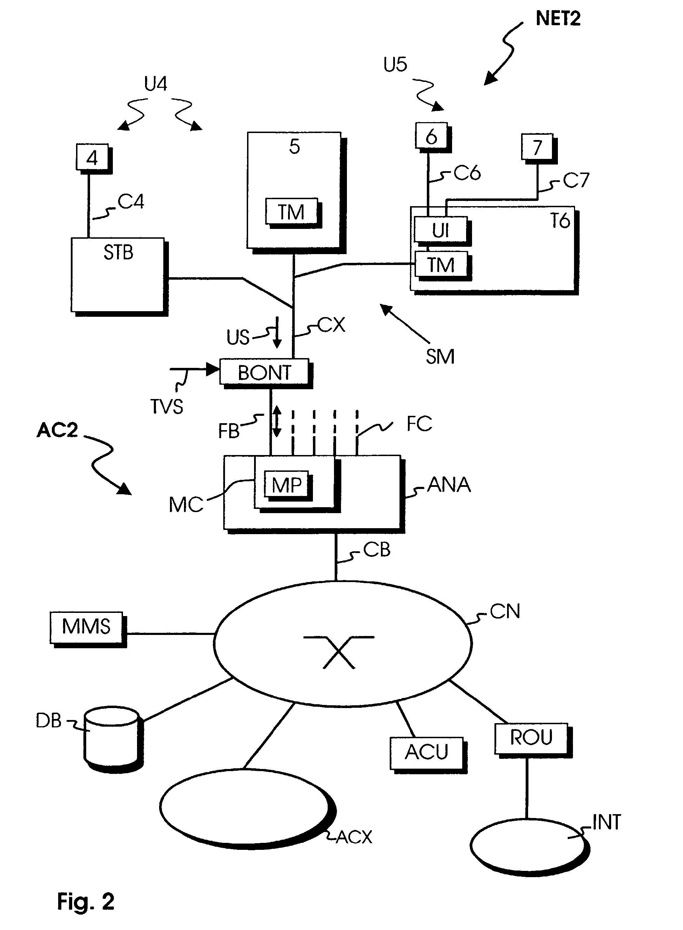

In Figur 2 ist eine Variante des Telekommunikationsnetzes NET gemäß Figur 1 mit einem Zugangsnetzwerk AC2 anstelle des Zugangsnetzwerks AC1 gezeigt. Soweit die Komponenten des Telekommunikationsnetzes NET2 in Figur 2 denen aus Figur 1 entsprechen, sind sie mit denselben Bezugszeichen versehen und werden im Folgenden nicht weiter erläutert. Das Zugangsnetzwerk AC2 ist im Unterschied zu dem Zugangsnetzwerk AC1 ein drahtgebundenes Zugangsnetzwerk, z.B. ein Hybrid-Fiber-Coax-Netzwerk (HFC), ein Powerline-Communication-Netzwerk (Kommunikation über ein Energieverteilungsnetz) oder dergleichen. Über das Zugangsnetzwerk AC2 erhalten Endgeräte 4 bis 7 Zugang zum Kernnetz CN. Im vorliegenden Fall handelt es sich bei dem Zugangsnetzwerk AC2 um ein HFC-Netzwerk. Auf dem Zugangsnetzwerk AC2 wird beispielsweise nach den Standards des DAVIC (Digital Audio Visual Council), der DVB-Organisation (Digital Video Broadcasting) und/oder der Data Over Cable Service Interface Specification (DOCSIS) kommuniziert. Als gemeinsames Medium SM dient bei dem Zugangsnetzwerk AC2 eine Coaxial-Kabel-Verbindung CX mit einem oder mehreren Coaxial-Kabeln, wobei die Übertragungskapazität mindestens eines Kabels zumindest teilweise in Upstream- bzw. Uplink-Richtung US von mehreren Endgeräten genutzt wird.

Anstelle der Basisstation BS sowie dem Funkschnittstellenmodul WIN sind bei dem Zugangsnetzwerk AC2 ein Zugangsnetzwerks-Adapter ANA (= Access Network Adaptation) sowie ein Verstärker BONT (= Broadband Optical Network Termination) vorgesehen. Der Zugangsnetzwerks-Adapter ANA, der vorliegend auch als eine Kopfstation (engl.: Head end) bezeichnet werden kann, entspricht bezogen auf die Erfindung im Wesentlichen der Basisstation BS. Er enthält ebenfalls einen Medium-Zugangscontroller MC sowie ein Kontrollmodul MP zur Kontrolle der Übertragungskapazität eines gemeinsamen Mediums SM, das bei dem Zugangsnetzwerk AC2 durch eine optische Verbindungsleitung FB zwischen dem Adapter ANA und dem Verstärker BONT sowie der Coaxial-Kabel-Verbindung CX gebildet wird. Der Adapter ANA kann auch weitere optische Verbindungsleitungen FC, z.B. optische Fasern, bedienen, die zu nicht dargestellten Zugangsnetzwerk-Adaptern führen.

Auf der Coaxial-Kabel-Verbindung CX werden in Upstream-Richtung US und in Downstream-Richtung DS Daten übertragen. Beispielsweise sind für die Upstream-Richtung US und für die Downstream-Richtung DS jeweils eine oder mehrere Übertragungsfrequenzen reserviert. Vorzugsweise ist die Übertragungskapazität in Upstream-Richtung US kleiner als in Downstream-Richtung DS. Beispielsweise ist eine ATM-Kommunikation Downstream mit 34 Mbit/s bzw. Upstream mit 2,15 Mbit/s vorgesehen. Wie auch bei der Funk-Verbindung WL können verschiedene Modulationsverfahren angewendet werden, beispielsweise QAM (Quadrature Amplitude Modulation), QPSK (Quadrature Phase Shift Keying), DQPSK (= Differential QPSK), etc. Jedenfalls greifen zumindest in Upstream-Richtung US die Endgeräte 4-7 auf das gemeinsame Medium SM konkurrierend zu. Die in Upstream-Richtung US erforderliche Übertragungskapazität wird den Endgeräten 4-7 durch den Adapter ANA, insbesondere den Medium-Zugangscontroller MC, zugeteilt. In Downstream-Richtung DS werden am Verstärker BONT zusätzlich Fernsehsignale TVS eingespeist, die auf der Verbindung CX zu den Endgeräten 4 - 7 übertragen werden. Prinzipiell könnten die Fernsehsignale TVS auch in den Adapter ANA eingespeist werden.

Das Endgerät 4 ist beispielsweise ein Fernsehgerät, das über ein Verbindung C4 an eine so genannte Set-Top-Box STB angeschlossen ist. Die STB bildet eine erfindungsgemäße Terminierungsvorrichtung und ist mit der Coaxial-Kabel-Verbindung CX verbunden. Ebenfalls eine erfindungsgemäße Terminierungsvorrichtung bildet das mit der Verbindung CX verbundene Endgerät 5, bei dem es sich beispielsweise um einen Personal Computer handelt. Die Endgeräte 4 und 5 bilden das so genannte Customer Promises Equipment (CPE) eines Benutzers U4. Eine Terminierungsvorrichtung T6 ist mit der Verbindung CX verbunden und bedient über Verbindungen C6, C7 die Endgeräte 6 und 7, z.B. Telefone, Personal Computer etc., eines Benutzers U5. Das Endgerät 5 und die Terminierungsvorrichtung T6 enthalten jeweils ein erfindungsgemäßes Terminierungsmodul TM.

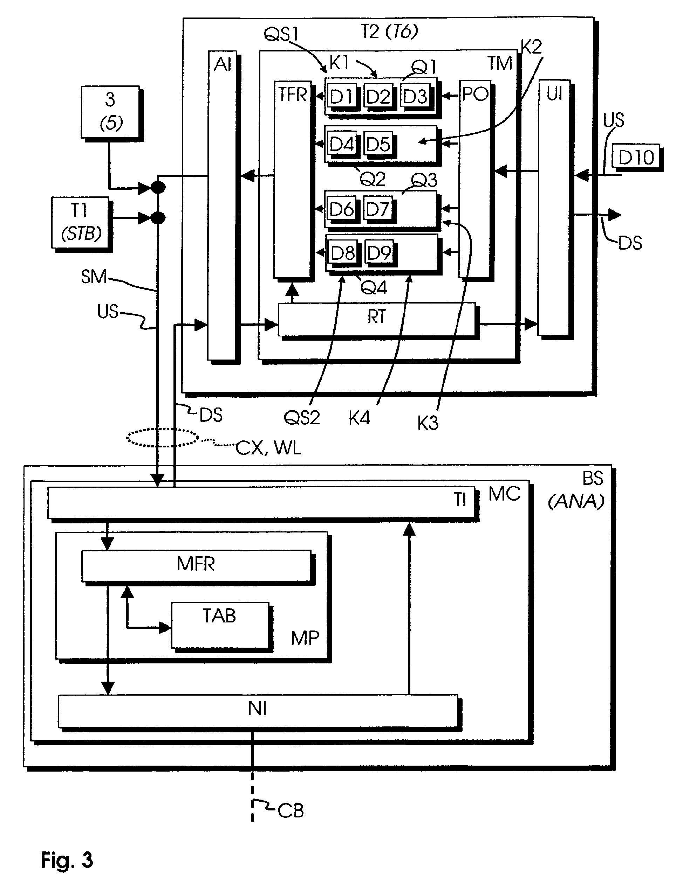

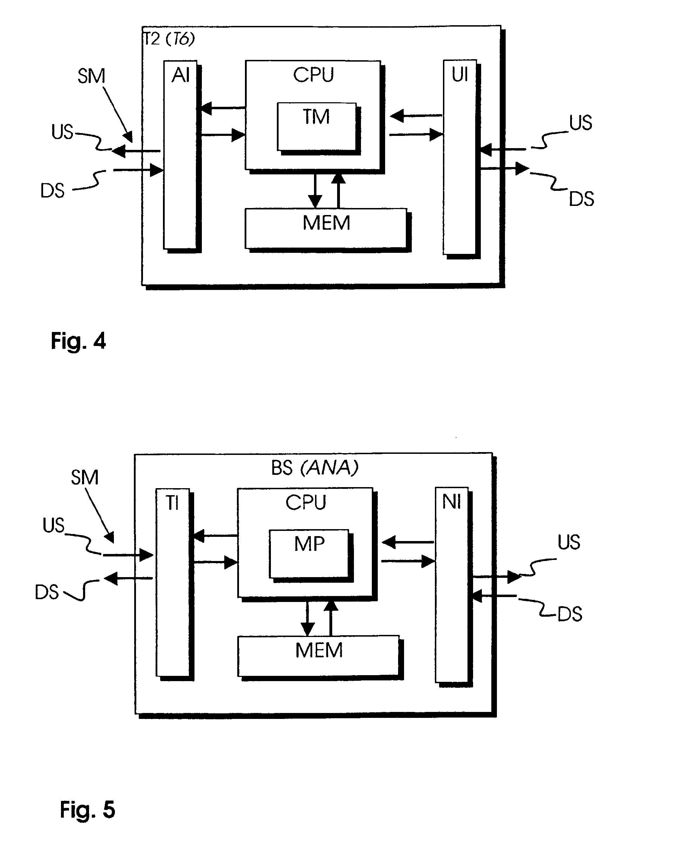

Im Folgenden werden anhand der schematischen, funktionalen Darstellungen in den Figuren 3 bis 5 die Funktionen einer erfindungsgemäßen Terminierungsvorrichtung, repräsentiert beispielsweise durch die Terminierungsvorrichtungen T2 und T6, und eines erfindungsgemäßen Medium-Zugangscontrollers, repräsentiert beispielsweise durch die Basisstation BS und den Adapter ANA, näher erläutert (die kursiven, in Klammern geschriebenen Bezugszeichen in den Figuren 3 bis 5 sind auf das Netzwerk NET2 gemäß Figur 2 bezogen). Im Folgenden wird jedoch aus Vereinfachungsgründen lediglich auf die Terminierungsvorrichtung T2 und die Basisstation BS Bezug genommen.

Die Terminierungsvorrichtung T2 und die Basisstation BS weisen Steuermittel CPU sowie Speichermittel MEM auf. Das Steuermittel CPU ist beispielsweise ein Prozessor, mit dem Programm-Code ausgeführt werden kann, der in den Speichermitteln MEM gespeichert ist. Bei den Speichermitteln MEM handelt es sich beispielsweise um RAM-Bausteine (RAM = Random Access Memory), sogenannte Flash-ROM-Module (ROM = Read Only Memory) und/oder eine Festplatte. Beispielsweise ist in den Speichermitteln MEM der Terminierungsvorrichtung T2 ein erfindungsgemäßes Terminierungsmodul TM gespeichert, dessen Programm-Code vom Steuermittel CPU ausgeführt wird. In den Speichermitteln MEM der Basisstation BS ist ein erfindungsgemäßes Kontrollmodul MP abgelegt, dessen Programm-Code vom Steuermittel CPU ausgeführt wird. Zum gemeinsamen Medium SM hin weist die Terminierungsvorrichtung T2 eine Schnittstelle Al und die Basisstation BS eine Schnittstelle TI auf. Zum Kernnetz CN hin weist die Basisstation BS eine Schnittstelle NI auf, bei der es sich beispielsweise um ein ATM- und/oder SDH-Schnittstellenmodul handelt. Weiterhin können die Terminierungsvorrichtung T2 und die Basisstation BS nicht dargestellte Eingabemittel, z.B. eine Tastatur, und Ausgabemittel, z.B. ein Liquid-Crystal-Display (LCD), aufweisen. Interne Verbindungen sind aus Gründen der Übersichtlichkeit lediglich mit Pfeilen angedeutet.

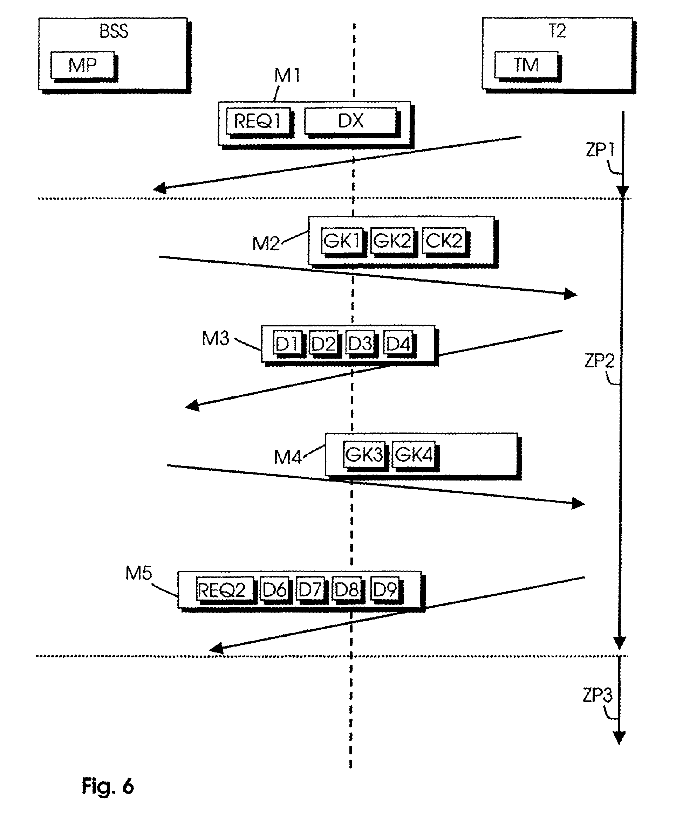

Unter Bezug auf Figur 6 wird im Folgenden eine erfindungsgemäße Kommunikation zwischen der Terminierungsvorrichtung T2 und der Basisstation BS erläutert. Für die Kommunikation wird beispielsweise ein erfindungsgemäß erweitertes MAC-Protokoll (MAC = Medium Access Protocol) verwendet, z.B. auf der Basis der IEEE 802.16 oder der ETSI BRAN HA DLC TS (IEEE = Institute of Electrical and Electronics Engineers; ETSI = European Telecommunications Standards Institute; HA = HiperAccess; DLC = Data Link Control; TS = Technical Specification).

Die Terminierungsvorrichtung T2 empfängt an der Benutzer-Schnittstelle UI vom Endgerät 2 auf dem gemeinsamen Medium SM zu übertragende Daten, beispielsweise Datenpakete D1 - D9. Eine Policing-Funktion PO beurteilt die Inhalte der Datenpakete D1 - D9 anhand vorbestimmter Kriterien und ordnet sie dementsprechend zwei Dienstqualitäten QS1 und QS2 zu: die Dienstqualität QS1 ist beispielsweise für in Echtzeit zu übertragende Daten vorgesehen, z.B. Gesprächsdaten, Videophoniedaten oder dergleichen. Die Dienstqualität QS2 ist z.B. für Daten, bei denen es auf eine Übertragungsverzögerung nicht ankommt, z.B. Anforderungsbefehle an das Internet INT oder dergleichen vorgesehen. Die Dienstqualität QS2 kann z.B. eine so genannte "Best Effort"-Qualität sein.

Weitere Unterscheidungen von Dienstqualitäten wären möglich. Beispielsweise kann bei Echtzeit-Daten zwischen Daten, die mit konstanter Datenrate (CBR = Constant Bit Rate) übertragen werden sollen, und Daten mit variabler Bitrate (VBR = Variable Bit Rate) unterschieden werden.

Der Dienstqualität QS1 sind Warteschlangen Q1, Q2 und der Dienstqualität QS2 Warteschlangen Q3, Q4 zugeordnet. Die Policing-Funktion PO oder eine dieser vorgeschaltete, nicht dargestellte Klassifizierungsfunktion ordnet beispielsweise die Datenpakete D1 bis D5 der Dienstqualität QS1 und die Datenpakete D6 bis D9 der Dienstqualität QS2 zu. Das Terminierungsmodul TM legt die Warteschlangen Q1 bis Q4 beispielsweise in den Speichermitteln MEM an.

Die Warteschlange Q1 ist für Daten einer ersten Datenklasse K1 vorgesehen, die mit einem vorgegebenen Kriterium konform sind, beispielsweise für Daten, die das Endgerät 2 bereits als in Echtzeit zu versendende Daten gekennzeichnet hat. Die Warteschlange Q2 hingegen ist für Daten einer zweiten Datenklasse K2 vorgesehen, die mit dem vorgegebenen Kriterium nicht konform sind, beispielsweise für Daten, die zwar nicht als Echtzeit-Daten gekennzeichnet sind, bei denen die Policing-Funktion PO oder die vorgeschaltete Klassifizierungsfunktion allerdings ermittelt, dass sie dennoch vorzugsweise in Echtzeit zu versenden sind. Die Policing-Funktion PO reiht z.B. auch solche Daten in die Warteschlange Q2 ein, die nicht in der ersten Datenklasse K1 versendet werden können, weil die für diese Datenklasse K1 vorgesehene Übertragungskapazität z.B. aufgrund einer Überlastsituation nicht zum Versenden aller Daten der Dienstqualität QS1 ausreicht. Weiterhin werden beispielsweise Datenpakete als "nicht-konform" der Datenklasse K2 zugeordnet, wenn sie eine vorbestimmte Paketgröße überschreiten und/oder wenn die zeitliche Abstände zwischen den Datenpaketen eine vorbestimmte Größe unterschreiten. Die Warteschlangen Q1, Q2 sind den Datenklassen K1, K2 zugeordnet. Gleiches gilt sinngemäß für die Warteschlangen Q3, Q4, die ebenfalls für mit einem Kriterium konforme und mit diesem Kriterium nicht konforme Daten der Dienstqualität QS2 vorgesehen sind. Die Warteschlangen Q3, Q4 sind Datenklassen K3 und K4 zugeordnet, die den Datenklassen K1 und K2 entsprechen.

Die Policing-Funktion PO reiht die Datenpakete D1 - D3 in die der Datenklasse K1 zugeordnete Warteschlange Q1 ein, weil die Daten mit dem vorgegebenen Kriterium konform sind, und die Datenpakete D4, D5 in die der Datenklasse K2 entsprechenden Warteschlange Q2, weil die Daten mit dem vorgegebenen Kriterium nicht konform sind. In entsprechender Weise werden die mit einem oder mehreren für die Dienstqualität QS2 relevanten Kriterien konformen Datenpakete D6 und D7 in die Warteschlange Q3 und die nicht konformen Datenpakete D7 und D8 in die Warteschlange Q4 eingereiht.

Für die Übertragung von Daten in den Dienstqualitäten QS1, QS2 kann zwischen dem Betreiber des Netzes NET und dem Nutzer U2 eine vertragliche Regelung bestehen, z.B. ein so genanntes "Service Level Agreement" (SLA), in der die in den Dienstqualitäten QS1 und QS2 jeweils maximal übertragbaren Datenmengen festgelegt sind. Jedes der Endgeräte 1 bis 3 bzw. der erfindungsgemäßen Terminierungsvorrichtungen T1, T2 und 3 kann vorliegend innerhalb einer jeweils vorbestimmten, z.B. vereinbarten, Übertragungskapazität Daten in Upstream-Richtung US in den Dienstqualitäten QS1 und QS2 versenden.

In der Upstream-Richtung US kontrolliert die Basisstation BS, insbesondere der Medium-Zugangscontroller MC die Zuteilung der vereinbarten Übertragungskapazität an die Terminierungsvorrichtungen T1, T2 und 3. Die erfindungsgemäße Zuteilung dieser Übertragungskapazität wird im Folgenden anhand der Terminierungsvorrichtung T2 erläutert.

Die Terminierungsvorrichtung T2 sendet eine Information REQ1 über die auf dem Medium SM zu übertragenden Daten an den Medium-Zugangscontroller MC. Die Information REQ1 gibt z.B. die Menge der zu übertragenden Daten an. Dabei ist in der Information REQ1 z.B. angegeben, dass in der Dienstqualität QS1 in den Datenklassen für konforme bzw. nicht-konforme Daten drei bzw. zwei Datenpakete zu übertragen sind. Vorzugsweise ist der Füllzustand der Warteschlangen Q1, Q2 in der Information REQ1 angegeben. Im vorliegenden Fall ist in der Information REQ1 beispielsweise angegeben, dass in der Warteschlange Q1 drei Datenpakete und in den Warteschlangen Q2-Q4 jeweils zwei Datenpakete auf eine Übertragung in Upstream-Richtung US warten.

Die Information REQ1 wird von einer Sende-Funktion TFR des Terminierungsmoduls TM generiert. Die Sende-Funktion TFR kann zwar die Information REQ1 in einer als separate Nachricht ausgestalteten Sendeanforderung an den Medium-Zugangscontroller MC versenden. Diese Nachricht kann im Rahmen einer so genannten Inband-Signalisierung auf dem gemeinsamen Medium SM oder im Rahmen einer so genannten Outband-Signalisierung auf einem separaten Signalisierungsweg übertragen werden. Vorliegend jedoch ist die Information REQ1 in einer Datennachricht M1 als so genanntes Piggy Back zusätzlich zu einem oder mehreren Datenpaketen DX enthalten, das die Sende-Funktion TFR generiert und über die Schnittstelle Al und über das gemeinsame Medium SM an die Basisstation BS und somit auch an den Medium-Zugangscontroller MC versendet.

Der Medium-Zugangscontroller MC empfängt die Datennachricht M1 an der Schnittstelle TI. Eine Empfangsfunktion MFR des Kontrollmoduls MP entnimmt die Information REQ1 aus der Datennachricht M1 und ermittelt anhand dieser, welche Übertragungskapazitäten der Terminierungsvorrichtung T2 für die Übertragung von Daten in den Dienstqualitäten QS1, QS2 zugeteilt werden. Dabei berücksichtigt das Kontrollmodul MP, welche Übertragungskapazität von den weiteren mit dem gemeinsamen Medium SM verbundenen Terminierungsvorrichtungen T1 und 3 benötigt wird. Dazu ist bei dem Kontrollmodul MP beispielsweise eine Tabelle TAB vorgesehen, in der die jeweils mit den Nutzern U1 - U3 für die Dienstqualitäten QS1 und QS2 vereinbarten Übertragungskapazitäten und deren aktuelle Nutzung eingetragen ist. Zusätzlich kann in der Tabelle TAB jeweils pro Dienstqualität QS1 und QS2 die aktuelle und/oder geplante Nutzung der Datenklassen K1 - K4 für mit den Dienstqualitäten Q1, Q2 konforme bzw. nicht konforme Daten eingetragen sein.

Eine geplante Nutzung der Übertragungskapazität des gemeinsamen Mediums SM bezieht sich beispielsweise auf jeweils eine Zuteilungsperiode im Voraus, für die die Terminierungsvorrichtungen T1, T2 und 3 ihre in Upstream-Richtung US zu übertragenden Daten anmelden. Beispielsweise wird die Nachricht M1 in einer ersten Zuteilungsperiode ZP1 versendet. Die Information REQ1 bezieht sich auf die Zuteilung von Übertragungskapazität einer zweiten, der ersten Zuteilungsperiode nachfolgenden Zuteilungsperiode ZP2. Die Terminierungsvorrichtungen T1 und 3 senden vorliegend ebenfalls in der ersten Zuteilungsperiode ZP1 der Nachricht M1 entsprechende Übertragungskapazitätsanforderungen für die Zuteilungsperiode ZP2.

Der Medium-Zugangscontroller MC führt Befehle des Kontrollmoduls MP aus. Gemäß dieser Instruktionen sendet er der Terminierungsvorrichtung T2 eine Nachricht M2 mit einer Zuteilungsinformation GK1, einer Freigabeinformation GK2 und einem Löschbefehl CK2. Die Zuteilungsinformation GK1 gibt an, dass das Terminierungsmodul TM alle in der Datenklasse K1 der Dienstqualität QS1 zu versendenen Datenpakete, vorliegend drei Datenpakete (D1 bis D3), in der Zuteilungsperiode ZP2 versenden darf. Diese drei Datenpakete nutzen jedoch die für die Dienstqualität QS1 auf dem gemeinsamen Medium SM bereitgestellte Übertragungskapazität für die Zuteilungsperiode ZP2 nicht vollständig aus. Es ist in der Dienstqualität QS1 in der Zuteilungsperiode ZP2 noch Übertragungskapazität für ein weiteres Datenpaket vorhanden. Beispielsweise ist ein Zeitschlitz ausreichend groß für vier Datenpakete oder es sind Zeitschlitze für vier Datenpakete vorhanden. Dementsprechend gibt die Freigabeinformation GK2 an, dass in der Zuteilungsperiode ZP2 in der Datenklasse K2 der Dienstqualität QS1 ein weiteres Datenpaket versendet werden darf.

Der Löschbefehl CK2 weist die Terminierungsvorrichtung T2 dazu an, alle überzähligen wartenden Datenpakete in der Datenklasse K2 der Dienstqualität QS1 zu löschen, weil in der Datenklasse K2 der Dienstqualität QS1 lediglich ein einziges Datenpaket in der zweiten Zuteilungsperiode ZP2 versendet werden darf. Der Löschbefehl CK2 betrifft das Datenpaket D5. Dementsprechend löscht das Terminierungsmodul TM das Datenpaket D5.

Die Nachricht M2 wird beispielsweise durch eine Empfangsfunktion RT analysiert. Diese weist die Sende-Funktion TFR zum Senden der Datenpakete D1 -D4 in der durch die Nachricht M2 vorgegebenen Weise an. In einer Nachricht M3 sendet das Terminierungsmodul TM die Datenpakete D1 bis D4 beider Datenklassen K1, K2 der Dienstqualität QS1 unter Berücksichtigung der zugeteilten bzw. freigegebenen Übertragungskapazität. Die Sende-Funktion TFR verpackt dabei die Datenpakete D1 bis D4 beispielsweise in einen oder mehrere so genannte Frames. Die Basisstation BS empfängt die Nachricht M3 und leitet sie über die Schnittstelle NI an das Kernnetz CN weiter.

Das Kontrollmodul MP sendet der Terminierungsvorrichtung T2 dann eine Nachricht M4 mit einer Zuteilungsinformation GK3 und einer Freigabeinformation GK4, die angeben, dass das Terminierungsmodul TM alle in den Datenklasse K3, K4 der Dienstqualität QS2 zu versendenden Datenpakete, vorliegend die Datenpakete D6-D9 in der Zuteilungsperiode ZP2 versenden darf. Dementsprechend versendet das Terminierungsmodul TM die Datenpakete D6-D9 in einer Nachricht M5 auf dem gemeinsamen Medium SM an die Basisstation BS.

Es wäre prinzipiell aber auch möglich, dass das Kontrollmodul MP die Informationen GK3, GK4 zusammen mit den Informationen GK1, GK2, CK2 bereits in der Nachricht M2 versendet.

Zusätzlich ist in der Nachricht M5 eine Information REQ2 enthalten, mit der das Terminierungsmodul TM die Menge an Daten angibt, die auf dem Medium SM in einer der Zuteilungsperiode ZP2 folgenden Zuteilungsperiode ZP3 zu versenden sind. In der Information REQ2 wird beispielsweise ein in der Datenklasse K4 der Dienstqualität QS2 zu versendendes Datenpaket D10 angemeldet.

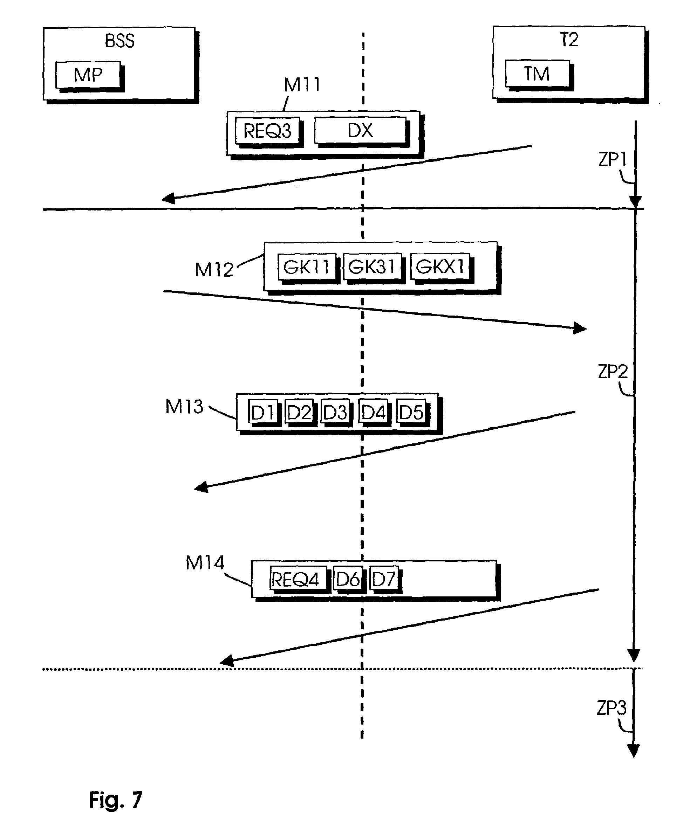

Figur 7 dient zur Veranschaulichung einer Variante des erfindungsgemäßen Verfahrens gemäß Figur 6. Die Terminierungsvorrichtung T2 meldet mit einer Nachricht M11 mit einer Information REQ3 zunächst die in den Datenklassen K1, K3 für konforme Daten der Dienstqualitäten QS1, QS2 zum Versenden anstehenden Datenpakete D1-D3; D6, D7 bei dem Medium-Zugangscontroller MC an. Eine Angabe über in den Datenklassen K2, K4 zu versendende, nicht-konforme Daten ist in der Information REQ3 nicht enthalten.

Der Medium-Zugangscontroller MC ermittelt dann, in welchem Umfang die Übertragungskapazität des gemeinsamen Mediums SM für die "konformen" Datenpakete D1-D3; D6, D7 erforderlich ist. Dabei kann der Medium-Zugangscontroller MC nur die Terminierungsvorrichtung T2 berücksichtigen oder, was besonders bevorzugt ist, auch eine oder mehrere weitere, mit dem gemeinsamen Medium SM verbundene Terminierungsvorrichtungen, z.B. auch die Terminierungsvorrichtungen T1 und 3. Der Medium-Zugangscontroller MC ermittelt dann, welche Übertragungskapazität die Terminierungsvorrichtungen T1, T2 und 3 für die Übertragung "konformer" Daten in einer oder mehreren Dienstqualitäten, beispielsweise den Dienstqualitäten QS1, QS2, benötigen.

Der Medium-Zugangscontroller MC teilt für die "konformen" Daten in beiden Dienstqualitäten QS1, QS2 der Terminierungsvorrichtung T2 bzw. allen Terminierungsvorrichtungen T1, T2 und 3 vorrangig Übertragungskapazität des gemeinsamen Mediums SM zu. Wenn dann noch Übertragungskapazität vorhanden ist, gibt der Medium-Zugangscontroller MC diese ungenutzte Übertragungskapazität für die Terminierungsvorrichtung T2 und/oder die weiteren Terminierungsvorrichtungen T1 und 3 zum Versenden "nicht-konformer" Daten frei.

Dementsprechend antwortet der Medium-Zugangscontroller MC mit einer Nachricht M12, die Zuteilungsinformationen GK11, GK31 sowie einer Freigabeinformation GKX1 enthält. Mit den Zuteilungsinformationen GK11, GK31 wird der Terminierungsvorrichtung T2 mitgeteilt, dass sie alle in den Datenklassen K1, K3 zum Versenden anstehenden Datenpakete D1-D3; D6, D7 auf dem gemeinsamen Medium SM versenden darf. Durch das Versenden der "konformen" Datenpakete D1-D3; D6, D7 sowie gegebenenfalls weiterer "konformer" Datenpakete durch die weiteren Terminierungsvorrichtungen T1 und 3 wird die Übertragungskapazität des gemeinsamen Mediums SM nur teilweise ausgenutzt. Daher gibt der Medium-Zugangscontroller MC mit der Freigabeinformation GKX1 nicht genutzte Übertragungskapazität für die Terminierungsvorrichtung T2 zum Versenden zweier weiterer Datenpakete frei. Die Terminierungsvorrichtung T2 berücksichtigt vorliegend beim Versenden ihrer Daten die Sequenz der Datenpakete. Beispielsweise bilden die Datenpakete D1-D5 eine Sequenz. Die Terminierungsvorrichtung T2 löscht aus dieser Sequenz kein Datenpaket, sondern stattdessen die Datenpakete D8, D9 der zweiten Datenklasse K4 der Dienstqualität QS2. Dies ist beispielsweise dann relevant, wenn es sich bei den Datenpaketen um ATM-Zellen handelt, die in einer vorbestimmten Reihenfolge zu versenden sind. Bei IP-Datenpaketen muss die Terminierungsvorrichtung T2 nicht unbedingt auf eine korrekte Sequenzierung achten, da solche Datenpakete eine interne Sequenznummer enthalten und somit vom Empfänger erforderlichenfalls wieder in eine korrekte Reihenfolge gebracht werden können.

Die Terminierungsvorrichtung T2 nutzt die durch Freigabeinformation GKX1 freigegebene Übertragungskapazität vorzugsweise zum Versenden von Daten einer möglichst hohen Dienstqualität, hier der Dienstqualität QS1. Auch dies ist ein Grund dafür, dass die Terminierungsvorrichtung T2 im vorliegenden Ausführungsbeispiel die Datenpakete D8, D9 der niedrigeren Dienstqualität QS2 und nicht die Datenpakete D4 und D5 der höheren Dienstqualität QS1 löscht.

Die Terminierungsvorrichtung T2 sendet zunächst die "konformen" Datenpakete D1-D3 und die "nicht-konformen" Datenpakete D4, D5 der Dienstqualität QS1 zusammen in einer Nachricht M13. Die Datenpakete D1-D5 sind in einer korrekten Reihenfolge in der Nachricht M13 enthalten. In einer Nachricht M14 sendet die Terminierungsvorrichtung T2 die "konformen" Datenpakete D6, D7 der Dienstqualität QS2. Für zwei "nicht-konforme" Datenpakete hat die Terminierungsvorrichtung T2 keine Sendefreigabe erhalten. Sie löscht daher die Datenpakete D8 und D9. In der Nachricht M14 ist zusätzlich eine Information REQ4 über in der Zuteilungsperiode ZP3 zu versendende Daten enthalten, in der z.B. angegeben ist, dass in der Datenklasse K1 das Datenpaket D10 zu versenden ist.

## Patentansprüche

1. Verfahren zur Nutzung von Übertragungskapazität eines gemeinsamen Mediums (SM) eines Mehrpunkt-zu-Punkt-Netzwerks (AC1; AC2), bei dem das gemeinsame Medium (SM) für mehrere Terminierungsvorrichtungen (T1, T2, 3; STB, 5, T6) zur Übertragung von Daten zwischen einem Punkt (BS; ANA) in dem Netzwerk und den Terminierungsvorrichtungen (T1, T2, 3; STB, 5, T6) vorgesehen ist, mit den Schritten:
- Eingruppieren von auf dem Medium (SM) in Uplink-Richtung zu dem Punkt (BS; ANA) zu übertragenden Daten (D1-D10) in eine erste Datenklasse (K1; K3) durch eine mit dem Medium (SM) verbundene Terminierungsvorrichtung (T1, T2, 3; STB, 5, T6), wenn die Daten mit einem vorgegebenen Kriterium konform sind, und in eine zweite Datenklasse (K2; K4), wenn die Daten mit dem vorgegebenen Kriterium nicht konform sind,
- Senden einer Information (REQ1 - REQ4) über die auf dem Medium (SM) zu übertragenden Daten (D1-D10) der ersten und der zweiten Datenklasse (K1, K3; K2, K4) durch die Terminierungsvorrichtung (T1, T2, 3; STB, 5, T6) an einen netzseitigen Medium-Zugangscontroller (MC) des Mehrpunkt-zu-Punkt-Netzwerks (AC1; AC2) zur Zuteilung von Übertragungskapazität des Mediums (SM) an die Terminierungsvorrichtungen (T1, T2, 3; STB, 5, T6),
- Zuteilen von Übertragungskapazität zur Übertragung der Daten der ersten Datenklasse und zumindest teilweise Freigabe zur Übertragung der Daten der zweiten Datenklasse in Abhängigkeit von der Information (REQ1 - REQ4) durch den Medium-Zugangscontroller (MC), wobei zur Übertragung der Daten der zweiten Datenklasse (K2; K4) auf dem gemeinsamen Medium (SM) vorhandene, für die erste Datenklasse (K1; K3) ungenutzte Übertragungskapazität, die zur Übertragung von Daten der ersten Datenklasse (K1; K3) mindestens einer Dienstqualität (QS1; QS2) reserviert ist, freigegeben wird, und
- Senden der Daten der ersten Datenklasse und eines Teils der Daten der zweiten Datenklasse auf dem Medium (SM) unter Berücksichtigung der jeweils zugeteilten Übertragungskapazität durch die Terminierungsvorrichtung (T1, T2, 3; STB, 5, T6), **gekennzeichnet durch**
- Senden eines Löschbefehls für den restlichen Teil der in die zweite Datenklasse (K2; K4) eingruppierten Daten **durch** den Medium-Zugangscontroller (MC), wenn die für die Daten der zweiten Datenklasse freigegebene Übertragungskapazität für eine Übertragung des restlichen Teils der in die zweite Datenklasse (K2; K4) eingruppierten Daten nicht ausreicht.

2. Verfahren nach Anspruch 1, **dadurch gekennzeichnet, dass** die Information (REQ1 - REQ4) die Menge und/oder den Inhalt der jeweils in der ersten bzw. der zweiten Datenklasse (K1, K3; K2, K4) zu übertragenden Daten (D1-D10) betrifft.

3. Verfahren nach Anspruch 1, **dadurch gekennzeichnet, dass** der Medium-Zugangscontroller (MC) die Übertragungskapazität zur Übertragung der Daten der zweiten Datenklasse (K2; K4) in Abhängigkeit von der Menge der von allen mit dem Medium (SM) verbundenen Terminierungsvorrichtungen (T1, T2, 3; STB, 5, T6) oder bei einer Gruppe der mit dem Medium (SM) verbundenen Terminierungsvorrichtungen jeweils in den ersten Datenklassen (K1; K3) zu versendenden Daten freigibt.

4. Verfahren nach Anspruch 1, **gekennzeichnet durch** Einreihen der auf dem Medium (SM) zu übertragenden Daten (D1-D10) der ersten Datenklasse (K1; K3) in eine erste Warteschlange (Q1, Q3) und der Daten der zweiten Datenklasse (K2; K4) eine zweite Warteschlange (Q2, Q4).

5. Verfahren nach Anspruch 1, **gekennzeichnet durch** Einteilen der Übertragungskapazität des Mediums (SM) in Zeitschlitze, und **durch** Zuteilen der Zeitschlitze zur Übertragung der Daten der ersten und der zweiten Datenklasse.

6. Verfahren nach Anspruch 1, **dadurch gekennzeichnet, dass** die Terminierungsvorrichtung (T1, T2, 3; STB, 5, T6) in die zweite Datenklasse eingruppierte Daten unter Berücksichtigung einer vorbestimmten Sende-Reihenfolge löscht.

7. Verfahren nach Anspruch 1, **dadurch gekennzeichnet, dass** in mehreren Dienstqualitäten (QS1; QS2) jeweils eine erste und zweite Datenklasse (K1, K3; K2, K4) vorgesehen sind.

8. Verfahren nach Anspruch 7, **dadurch gekennzeichnet, dass** der Medium-Zugangscontroller (MC) vorrangig die Übertragungskapazität des Mediums (SM) für die Übertragung von Daten (D1 -D3, D6, D7) in den ersten Datenklassen (K1, K3) der Dienstqualitäten (QS1; QS2) zuteilt und zum Versenden dieser Daten nicht erforderliche Übertragungskapazität für die Übertragung von Daten (D4, D5; D8, D9) in zweiten Datenklassen (K2, K4) der Dienstqualitäten (QS1; QS2) freigibt.

9. Medium-Zugangscontroller eines Mehrpunkt-zu-Punkt-Netzwerks (AC1; AC2) zur Nutzung von Übertragungskapazität eines gemeinsamen Mediums (SM) des Mehrpunkt-zu-Punkt-Netzwerks (AC1; AC2), bei dem das gemeinsame Medium (SM) für mehrere Terminierungsvorrichtungen (T1, T2, 3; STB, 5, T6) zur Übertragung von Daten zwischen einem Punkt (BS; ANA) in dem Netzwerk und den Terminierungsvorrichtungen (T1, T2, 3; STB, 5, T6) vorgesehen ist, mit:
- Mitteln (TI) zum Empfangen einer Information (REQ1 - REQ4) über auf dem Medium (SM) in Uplink-Richtung zu dem Punkt (BS; ANA) zu übertragenden Daten (D1-D10) einer ersten und einer zweiten Datenklasse von einer mit dem Medium (SM) verbundenen Terminierungsvorrichtung (T1, T2, 3; STB, 5, T6), wobei die Daten in eine erste Datenklasse (K1; K3) eingruppiert sind, wenn die Daten mit einem vorgegebenen Kriterium konform sind, und in eine zweite Datenklasse (K2; K4) eingruppiert sind, wenn die Daten mit dem vorgegebenen Kriterium nicht konform sind,
- Mitteln zum Zuteilen von Übertragungskapazität zur Übertragung der Daten der ersten und der zweiten Datenklasse in Abhängigkeit von der Information (REQ1 - REQ4), wobei auf dem gemeinsamen Medium (SM) vorhandene, für die erste Datenklasse (K1; K3) ungenutzte Übertragungskapazität zur Übertragung der Daten der zweiten Datenklasse (K2; K4) freigegeben wird,
- Mittel (CPU, MP, TI) zum Senden einer Zuteilungsinformation (GK1; GK3) über auf dem Medium (SM) verfügbare Übertragungskapazität für die erste Datenklasse (K1; K3) an die Terminierungsvorrichtung (T1, T2, 3; STB, 5, T6), und
- Mittel (CPU, MP, TI) zum Senden einer Freigabeinformation (GK2; GK4) von dem Medium-Zugangscontroller (MC) zur zumindest teilweisen Freigabe von auf dem gemeinsamen Medium (SM) vorhandener, zur Übertragung von Daten der ersten Datenklasse (K1; K3) mindestens einer Dienstqualität (QS1; QS2) reservierter ungenutzter Übertragungskapazität zur Übertragung eines Teils der Daten der zweiten Datenklasse (K2; K4), **dadurch gekennzeichnet,**
- **dass** der Medium-Zugangscontroller Mittel (CPU, MP, TI) zum Senden eines Löschbefehls für den restlichen Teil der in die zweite Datenklasse (K2; K4) eingruppierten Daten durch den Medium-Zugangscontroller (MC) aufweist, wenn die für die Daten der zweiten Datenklasse freigegebene Übertragungskapazität für eine Übertragung des restlichen Teils der in die zweite Datenklasse (K2; K4) eingruppierten Daten nicht ausreicht.

10. Medium-Zugangscontroller nach Anspruch 9, **dadurch gekennzeichnet, dass** die Mittel zum Freigeben der Übertragungskapazität zur Übertragung der Daten der zweiten Datenklasse (K2; K4) in Abhängigkeit von der Menge der bei allen mit dem Medium (SM) verbundenen Terminierungsvorrichtungen (T1, T2, 3; STB, 5, T6) oder bei einer Gruppe der mit dem Medium (SM) verbundenen Terminierungsvorrichtungen (T1, T2, 3; STB, 5, T6) in den ersten Datenklassen zu versendenden Daten (K1; K3) ausgestaltet sind.

11. Terminierungsvorrichtung zur Nutzung von Übertragungskapazität eines gemeinsamen Mediums (SM) eines Mehrpunkt-zu-Punkt-Netzwerks (AC1; AC2), bei dem das gemeinsame Medium (SM) für mehrere Terminierungsvorrichtungen (T1, T2, 3; STB, 5, T6) zur Übertragung von Daten zwischen einem Punkt (BS; ANA) in dem Netzwerk und den Terminierungsvorrichtungen (T1, T2, 3; STB, 5, T6) vorgesehen ist, wobei die Terminierungsvorrichtung (T1, T2, 3; STB, 5, T6) eine Schnittstelle (AI) zum Anschluss an das Medium (SM) aufweist, und wobei die Terminierungsvorrichtung (T1, T2, 3; STB, 5, T6)
- Mittel (CPU, TM, AI) zum Eingruppieren von auf dem Medium (SM) in Uplink-Richtung zu dem Punkt (BS; ANA) zu übertragenden Daten (D1-D10) in eine erste Datenklasse (K1; K3), wenn die Daten mit einem vorgegebenen Kriterium konform sind, und in eine zweite Datenklasse (K2; K4), wenn die Daten mit dem vorgegebenen Kriterium nicht konform sind,
- Mittel (CPU, TM, AI, RT) zum Senden einer Information (REQ1 - REQ4) über die auf dem Medium (SM) zu übertragenden Daten (D1-D10) der ersten und der zweiten Datenklasse (K1, K3; K2, K4) an einen netzseitigen Medium-Zugangscontroller (MC) des Mehrpunkt-zu-Punkt-Netzwerks (AC1; AC2) zur Zuteilung von Übertragungskapazität des Mediums (SM) für die Terminierungsvorrichtungen (T1, T2, 3; STB, 5, T6),
- Mittel (CPU, TM, AI, RT) zum Empfangen einer Zuteilungsinformation (GK1; GK3) von dem Medium-Zugangscontroller (MC) über auf dem Medium (SM) verfügbare Übertragungskapazität für die erste Datenklasse (K1; K3),
- Mittel (CPU, TM, AI, RT) zum Empfangen einer Freigabeinformation (GK2; GK4) von dem Medium-Zugangscontroller (MC) zur zumindest teilweisen Freigabe von auf dem gemeinsamen Medium (SM) vorhandener, zur Übertragung von Daten der ersten Datenklasse (K1; K3) mindestens einer Dienstqualität (QS1; QS2) reservierter ungenutzter Übertragungskapazität zur Übertragung eines Teils der Daten der zweiten Datenklasse (K1; K3) mindestens einer Dienstqualität (QS1; QS2), und
- Mittel (CPU, TM, AI, RT) zum Senden der Daten der ersten Datenklasse und eines Teils der Daten der zweiten Datenklasse auf dem Medium (SM) unter Berücksichtigung der jeweils zugeteilten Übertragungskapazität aufweist, **dadurch gekennzeichnet,**
- **dass** die Terminierungsvorrichtung Mittel (CPU, MP, TI) zum Empfangen eines Löschbefehls des Medium-Zugangscontrollers (MC) für den restlichen Teil der in die zweite Datenklasse (K2; K4) eingruppierten Daten aufweist, wenn die für die Daten der zweiten Datenklasse freigegebene Übertragungskapazität für eine Übertragung des restlichen Teils der in die zweite Datenklasse (K2; K4) eingruppierten Daten nicht ausreicht.

12. Terminierungsvorrichtung nach Anspruch 11, **dadurch gekennzeichnet, dass** sie Mittel (PO) zum Einreihen der auf dem Medium (SM) zu übertragenden Daten (D1-D10) der ersten Datenklasse (K1; K3) in eine erste Warteschlange (Q1; Q3) und der Daten der zweiten Datenklasse (K2; K4) eine zweite Warteschlange (Q2; Q4) aufweist.

13. Mehrpunkt-zu-Punkt-Netzwerk (AC1; AC2) zur Nutzung von Übertragungskapazität eines gemeinsamen Mediums (SM) des Mehrpunkt-zu-Punkt-Netzwerks (AC1; AC2), bei dem das gemeinsame Medium (SM) für mehrere Terminierungsvorrichtungen (T1, T2, 3; STB, 5, T6) zur Übertragung von Daten zwischen einem Punkt (BS; ANA) in dem Netzwerk und den Terminierungsvorrichtungen (T1, T2, 3; STB, 5, T6) vorgesehen ist, mit einem Medium-Zugangscontroller nach Anspruch 9 und mindestens einer Terminierungsvorrichtung nach Anspruch 11.

## Claims

1. Method for allocating transmission capacity of a shared medium (SM) in a multipoint-to-point network (AC1; AC2), in which the shared medium (SM) is provided for a plurality of terminating devices (T1, T2, 3; STB, 5, T6) for transmitting data between one point (BS; ANA) in the network and the terminating devices (T1, T2, 3; STB, 5, T6), comprising the steps of:
- grouping of data (D1-D10) to be transmitted on the medium (SM) in the uplink direction to the point (BS; ANA) in a first data category (K1; K3) by means of a terminating device (T1, T2, 3; STB, 5, T6), if the data conform to a specified criterion and in a second data category (K2; K4) if the data do not conform to the specified criterion,
- transmission of an information item (REQ1 - REQ4) about the data (D1-D10) of the first and of the second data categories (K1, K3; K2, K4) to be transmitted on the medium (SM) by the terminating device (T1, T2, 3; STB, 5, T6) to a network-side medium access controller (MC) of the multipoint-to-point network (AC1; AC2) for the purpose of allocating transmission capacity of the medium (SM) to the terminating devices (T1, T2, 3; STB, 5, T6),
- allocation of transmission capacity for the purpose of transmitting the data of the first data category and at least partial release for the transmission of the data of the second data category as a function of the item of information (REQ1 - REQ4) by the medium access controller (MC), wherein available transmission capacity not used for the first data category (K1; K3), which capacity is reserved for the purpose of transmitting data of the first data category (K1; K3) of at least one quality service (QS1; QS2), is released for the purpose of transmitting the data of the second data category (K2, K4) on the shared medium (SM), and
- transmission by the terminating device (T1, T2, 3; STB, 5, T6) of data of the first data category and some of the data of the second data category on the medium (SM) taking account of the respectively allocated transmission capacity, **characterized by**
- transmission by the medium access controller (MC) of an erase command for the remainder of the data grouped in the second data category (K2, K4) if the transmission capacity released for the data of second data category (K2; K4) is insufficient for the a transmission of the remainder of the data grouped in the second data category (K2, K4).

2. Method according to Claim 1, **characterized in that** the information item (RDQ1-REQ4) relates to the quantity and/or the content of the data (D1-D10) to be transmitted in each case in the first or the second data category (K1, K3; K2, K4).

3. Method according to Claim 1, **characterized in that** the medium access controller (MC) releases the transmission capacity for transmitting the data of the second data category (K2; K4) as a function of the quantity of data to be transmitted respectively in the first data categories (K1; K3) by all the terminating devices (T1, T2, 3; STB, 5, T6) connected to the medium (SM) or in the case of a group of the termination devices connected with the medium (SM).

4. Method according to Claim 1, **characterized by** the arrangement of the data (D1-D10), to be transmitted on the medium (SM), of the first data category (K1; K3) in a first queue (Q1, Q3) and the data of the second data category (K2; K4) in a second queue (Q2, Q4).

5. Method according to Claim 1, **characterized by** dividing the transmission capacity of the medium (SM) into time slots and by allocation of the time slots for the transmission of the data of the first and the second data category.

6. Method according to Claim 1, **characterized in that** the terminating device (T1, T2, 3; STB, 5, T6) erases data grouped in the second data category taking into account a predetermined transmission order.

7. Method according to Claim 1, **characterized in that** first and second data categories (K1, K3; K2, K4) are provided in each of a plurality of service qualities (QS1; QS2).

8. Method according to Claim 7, **characterized in that** the medium access controller (MC) allocates, as a matter of priority, the transmission capacity of the medium (SM) for transmitting data (D1-D3, D6, D7) in the first data categories (K1, K3) of the service qualities (QS1; QS2) and releases transmission capacity not necessary for the transmission of said data for the transmission of data (D4, D5; D8, D9) in second data categories (K2, K4) of the service qualities (QS1; QS2).

9. Medium access controller of a multipoint-to-point network (AC1; AC2) for utilizing the transmission capacity of a shared medium (SM) of the multipoint-to-point network (AC1; AC2), wherein the shared medium is provided for a plurality of terminating devices (T1, T2, 3; STB, 5, T6) for the purpose of transmitting data between a point (BS; ANA) in the network and the terminating devices (T1, T2, 3; STB, 5, T6), comprising
- means (TI) for receiving an item of information (REQ1 - REQ4) about data (D1-D10), to be transmitted on the medium (SM) in the uplink direction to the point (BS; ANA), of a first and a second data category by a terminating device (T1, T2, 3; STB, 5, T6) connected to the medium (SM), wherein the data are grouped in a first data category (K1; K3) if the data conform to a specified criterion and are grouped in a second data category (K2; K4) if the data do not conform to the specified criterion,
- means for allocating transmission capacity for the purpose of transmitting data of the first and of the second data category as a function of the item of information (REQ1 - REQ4), wherein available transmission capacity not used for the first data category (K1; K3) is released for the purpose of transmitting the data of the second category (K2; K4) on the shared medium (SM),
- means (CPU, MP, TI) for transmitting an item of allocation information (GK1; GK3) about the transmission capacity available on the medium (SM) for the first data category (K1; K3) to the terminating device (T1, T2, 3; STB, 5, T6), and
- means (CPU, MP, TI) for transmitting an item of release information (GK2; GK4) by the medium access controller (MC) for purpose of the at least partial release of available, unused transmission capacity reserved for transmitting data of the first data category (K1; K3) of at least one quality of service (QS1; QS2) for the purpose of transmitting some of the data of the second data category (K2; K4), **characterized**
- **in that** the medium access controller has means (CPU, MP, TI) for the transmission of an erase command for the remainder of the data grouped in the second data category (K2; K4) by the medium access controller (MC) if the transmission capacity released for the data of the second data category is insufficient for a transmission of the remainder of the data grouped in the second data category (K2; K4).

10. Medium access controller according to Claim 9, **characterized in that** the means are configured to release the transmission capacity for the transmission of the data of the second data category (K2; K4) as a function of the quantity of data (K1; K3) to be transmitted in the first data categories in the case of all the terminating devices (T1, T2, 3; STB, 5, T6) connected to the medium (SM), or in the case of a group of terminating devices (T1, T3, 3; STB, 5, T6) connected to the medium (SM).

11. Terminating device for the utilization of the transmission capacity of a shared medium (SM) of a multipoint-to-point network (AC1; AC2), wherein the shared medium (SM) is provided for a plurality of terminating devices (T1, T2, 3; STB, 5, T6) for the purpose of transmitting data between a point (BS; ANA) in the network and the terminating devices (T1, T2, 3; STB, 5, T6), wherein the terminating device (T1, T2, 3; STB, 5, T6) has an interface (AI) for connecting to the medium (SM) and wherein the terminating device (T1, T2, 3; STB, 5, T6) has
means (CPU, TM, AI) for grouping data (D1-D10) to be transmitted on the medium (SM) in the uplink direction to the point (BS; ANA) in a first data category (K1; K3) if the data conform to a specified criterion and in a second data category (K2; K4) if the data do not conform to the specified criterion,
- means (CPU, TM, AI, RT) for transmitting an item of information (REQ1 - REQ4) about the data (D1-D10) of the first and the second data category (K1, K3; K2, K4) to be transmitted on the medium (SM) to a network-side medium access controller (MC) of the multipoint-to-point network (AC1; AC2) for the purpose of allocating transmission capacity of the medium (SM) for the terminating devices (T1, T2, 3; STB, 5, T6)
- means (CPU, TM, AI, RT) for receiving an item of allocation information (GK1; GK3) by the medium access controller (MC) about the transmission capacity available on the medium (SM) for the first data category (K1; K3),
- means (CPU, TM, AI, RT) for receiving an item of release information (GK2; GK4) by the medium access controller (MC) for the purpose of the at least partial release of unused transmission capacity reserved for the transmission of data of the first data category (K1; K3) of at least one quality of service (QS1; QS2) available on the shared medium (SM) for the transmission of some of the data of the second data category (K2; K4) of at least one quality of service (QS1; QS2), and
- means (CPU, TM, AI, RT) for transmitting data of the first data category and some of the data of the second data category on the medium (SM) taking into account the respectively allocated transmission capacity, **characterized**
- **in that** the terminating device has means (CPU, MP, TI) for receiving an erase command of the medium access controller (MC) for the remainder of the data grouped in the second data category (K2; K4) if the transmission capacity released for the data of the second data category is insufficient for a transmission of the remainder of the data grouped in the second data category (K2; K4).

12. Terminating device according to Claim 11, **characterized in that** it has means (PO) for arranging data (D1-D10), to be transmitted on the medium (SM), of the first data category (K1; K3) in a first queue (Q1; Q3) and the data of the second data category (K2; K4) in a second queue (Q2; Q4).

13. Multipoint-to-point network (AC1; AC2) for the utilization of the transmission capacity of a shared medium of the multipoint-to-point network (AC1; AC2), wherein the shared medium (SM) is provided for a plurality of terminating devices (T1, T2, 3; STB, 5, T6) for the purpose of transmitting data between a point (BS; ANA) in the network and the terminating devices (T1, T2, 3; STB, 5, T6), having a medium access controller according to Claim 9 and at least one terminating device according to Claim 11.

## Revendications

1. Procédé permettant l'utilisation de la capacité de transmission d'un support partagé (SM) d'un réseau multipoint à point (AC1 ; AC2), avec lequel est prévu le support partagé (SM) pour plusieurs dispositifs de terminal (T1, T2, 3 ; STB, 5, T6) en vue de la transmission de données entre un point (BS ; ANA) dans le réseau et les dispositifs de terminal (T1, T2, 3 ; STB, 5, T6), comportant les étapes suivantes :
- rangement des données (D1-D10) dans une première classe de données (K1 ; K3) à transmettre au point (BS ; ANA) sur le support (SM) dans le sens d'une liaison ascendante par un dispositif de terminal (T1, T2, 3 ; STB, 5, T6) relié au support (SM), si les données sont conformes à un critère prescrit, et dans une seconde classe de données (K2 ; K4), si les données ne sont pas conformes à un critère prescrit,
- envoi d'une information (REQ1 - REQ4) à un contrôleur d'accès au support (MC) côté réseau du réseau multipoint à point (AC1 ; AC2) par le dispositif de terminal (T1, T2, 3 ; STB, 5, T6) sur les données (D1-D10) de la première et de la seconde classe de données (K1, K3 ; K2, K4) à transmettre sur le support (SM) en vue de l'attribution de la capacité de transmission du support (SM) aux dispositifs de terminal (T1, T2, 3 ; STB, 5, T6),
- attribution de la capacité de transmission en vue de la transmission des données de la première classe de données et autorisation au moins partielle de transmission des données de la seconde classe de données par le contrôleur d'accès au support (MC) en fonction de l'information (REQ1 - REQ4), la capacité de transmission existant sur le support partagé (SM), non utilisée pour les données de la première classe de données (K1 ; K3) qui est réservée en vue de la transmission des données de la première classe de données (K1 ; K3) au moins d'une qualité de service (QS1 ; QS2), étant libérée en vue de la transmission des données de la seconde classe de données (K2 ; K4), et
- envoi des données de la première classe de données et d'une partie des données de la seconde classe de données sur le support (SM) en tenant compte de la capacité de transmission attribuée respectivement par le dispositif de terminal (T1, T2, 3 ; STB, 5, T6), **caractérisé par**
- envoi d'une instruction de suppression par le contrôleur d'accès au support (MC) pour la partie restante des données rangées dans la seconde classe de données (K2 ; K4), si la capacité de transmission libérée pour les données de la seconde classe de données n'est pas suffisante pour une transmission de la partie restante des données rangées dans la seconde classe de données (K2 ; K4).

2. Procédé selon la revendication 1, **caractérisé en ce que** l'information (REQ1 - REQ4) concerne la quantité et/ou le contenu des données (D1-D10) à transmettre respectivement dans la première ou la seconde classe de données (K1, K3 ; K2, K4).

3. Procédé selon la revendication 1, **caractérisé en ce que** le contrôleur d'accès au support (MC) libère la capacité de transmission en vue de la transmission des données de la seconde classe de données (K2 ; K4) en fonction de la quantité de données à transmettre respectivement dans les premières classes de données (K1; K3) par l'ensemble des dispositifs de terminal (T1, T2, 3 ; STB, 5, T6) reliés au support (SM) ou pour un groupe de dispositifs de terminal reliés au support (SM).

4. Procédé selon la revendication 1, **caractérisé en ce que** les données (D1-D10) de la première classe de données (KI ; K3) à transmettre sur le support (SM) sont insérées dans une première file d'attente de mots (Q1, Q3) et les données de la seconde classe de données (K2 ; K4) dans une seconde file d'attente (Q2, Q4).

5. Procédé selon la revendication 1, **caractérisé en ce que** la capacité de transmission du support (SM) est répartie dans des tranches de temps, et les tranches de temps sont attribuées en vue de la transmission des données de la première et de la seconde classe de données.

6. Procédé selon la revendication 1, **caractérisé en ce que** le dispositif de terminal (T1, T2, 3 ; STB, 5, T6) supprime les données rangées dans la seconde classe de données en tenant compte d'une séquence d'envoi prédéterminée.

7. Procédé selon la revendication 1, **caractérisé en ce que** respectivement une première et une seconde classe de données (K1, K3 ; K2, K4) sont prévues dans plusieurs qualités de service (QS1 ; QS2).

8. Procédé selon la revendication 7, **caractérisé en ce que** le contrôleur d'accès au support (MC) attribue de préférence la capacité de transmission du support (SM) pour la transmission des données (D1-D3, D6, D7) dans les premières classes de données (K1, K3) des qualités de service (QS1 ; QS2) et libère la capacité de transmission non nécessaire pour la transmission des données (D4, D5 ; D8, D9) dans les secondes classes de données (K2, K4) des qualités de service (QS1 ; QS2) pour transmettre ces données.

9. Contrôleur d'accès au support de réseau multipoint à point (AC1 ; AC2) permettant l'utilisation de la capacité de transmission d'un support partagé (SM) de réseau multipoint à point (AC1 ; AC2), avec lequel est prévu le support partagé (SM) pour plusieurs dispositifs de terminal (T1, T2, 3 ; STB, 5, T6) en vue de la transmission de données entre un point (BS ; ANA) dans le réseau et les dispositifs de terminal (T1, T2, 3 ; STB, 5, T6), comportant :
- des moyens (TI) permettant la réception d'une information (REQ1 - REQ4)_par un dispositif de terminal (T1, T2, 3 ; STB, 5, T6) relié au support (SM) sur les données (D1-D10) d'une première et d'une seconde classe de données (SM) à transmettre au point (BS ; ANA) sur le support dans le sens d'une liaison ascendante, les données étant rangées dans une première classe de données (K1 ; K3), si les données sont conformes à un critère prescrit, et rangées dans une seconde classe de données (à K2 ; K4), si les données ne sont pas conformes au critère prescrit,
- des moyens permettant l'attribution de la capacité de transmission en vue de la transmission des données de la première et de la seconde classe de données en fonction de l'information (REQ1 - REQ4), la capacité de transmission existant sur le support partagé (SM), non utilisée pour la première classe de données (K1; K3) étant libérée en vue de la transmission des données de la seconde classe de données (K2 ; K4),
- des moyens (CPU, MP, TI) permettant l'envoi d'une information d'attribution (GK1 ; GK3) au dispositif de terminal (T1, T2, 3 ; STB, 5, T6) sur la capacité de transmission disponible sur le support (SM) pour la première classe de données (K1 ; K3), et
- des moyens (CPU, MP, TI) permettant l'envoi d'une information de libération (GK2 ; GK4) par le contrôleur d'accès au support (MC) en vue de la libération au moins partielle de la capacité de transmission existant sur le support partagé (SM), non utilisée réservée en vue de la transmission des données de la première classe de données (K1 ; K3) au moins d'une qualité de service (QS1 ; QS2) en vue de la transmission d'une partie des données de la seconde classe de données (K2 ; K4), **caractérisé en ce que**,
- le contrôleur d'accès au support moyen (CPU, MP, TI) présente des moyens permettant l'envoi d'une instruction de suppression pour la partie restante des données rangées dans la seconde classe de données (K2 ; K4) par le contrôleur d'accès au support (MC), si la capacité de transmission libérée pour les données de la seconde classe de données n'est pas suffisante pour une transmission de la partie restante des données rangées dans la seconde classe de données (K2 ; K4).

10. Contrôleur d'accès au support selon le revendication 9, **caractérisé en ce que** les moyens permettant la libération de la capacité de transmission en vue de la transmission des données de la seconde classe de données (K2 ; K4) sont formés en fonction de la quantité de données (K1 ; K3) à transmettre dans les premières classes de données pour l'ensemble des dispositifs de terminal (TI, T2, 3 ; STB, 5, T6) reliés au support (SM) ou pour un groupe de dispositifs de terminal (T1, T2, 3 ; STB, 5, T6) reliés au support (SM).

11. Dispositif de terminal permettant l'utilisation de la capacité de transmission d'un support partagé (SM) d'un réseau multipoint à point (AC1 ; AC2), avec lequel est prévu le support partagé (SM) pour plusieurs dispositifs de terminal (tel, T2, 3 ; STB, 5, T6) en vue de la transmission de données entre un point (BS ; ANA) dans le réseau et les dispositifs de terminal (T1, T2, 3 ; ST13, 5, T₆), le dispositif de terminal (T1, T2, 3 ; STB, 5, T6) présentant une interface (AI) en vue du raccordement au support (SM), et le dispositif de terminal (T1, T2, 3 ; STB, 5, T6) présentant :
- des moyens (CPU, TM, AI) permettant de ranger dans une première classe de données (K1 ; K3) les données (D1-D10) à transmettre au point (BS ; ANA) sur le support (SM) dans le sens d'une liaison ascendante, si les données sont conformes à un critère prescrit, et dans une seconde classe de données (K2 ; K4), si les données ne sont pas conformes au critère prescrit,
- des moyens (CPU, TM, Al, RT) permettant l'envoi à un contrôleur d'accès au support (MC) côté réseau du réseau multipoint à point (AC1 ; AC2) d'une information (REQ1 - REQ4) sur les données (D1-D10) de la première et de la seconde classe de données (K1, K3 ; K2, K4) à transmettre sur le support (SM) en vue de l'attribution de la capacité de transmission du support (SM) pour les dispositifs de terminal (tel, T2, 3 ; STB, 5, T6),
- des moyens (CPU, MT, TI) permettant la réception d'une information d'attribution (GK1 ; GK3) par le contrôleur d'accès au support (MC) sur la capacité de transmission disponible sur le support (SM) pour la première classe de données (K1 ; K3),
- des moyens (CPU, MT, TI) permettant la réception d'une information de libération (GK2 ; GK4) par le contrôleur d'accès au support (MC) en vue de la libération au moins partielle de la capacité de transmission existant sur le support partagé (SM), non utilisée réservée en vue de la transmission des données de la première classe de données (K1 ; K3) au moins d'une qualité (QS1 ; QS2), en vue de la transmission d'une partie des données de la seconde classe de données (K1 ; K3), au moins d'une qualité de service (QS1 ; QS2), et
- des moyens (CPU, MT, TI) permettant l'envoi des données de la première classe de données et d'une partie des données de la seconde classe de données sur le support (SM) en tenant compte de la capacité de transmission attribuée respectivement, **caractérisé en ce que**
- le dispositif de terminal (CPU, MP, TI) présente des moyens pour la réception d'une instruction de suppression du contrôleur d'accès au support (MC) pour la partie restante des données rangées dans la seconde classe de données (K2 ; K4), si la capacité de transmission libérée pour les données de la seconde classe de données n'est pas suffisante pour une transmission de la partie restante des données rangées dans la seconde classe de données (K2 ; K4).

12. Dispositif de terminal selon la revendication 11, **caractérisé en ce qu'**il présente des moyens (PO) permettant l'insertion des données (D1 - D10) de la première classe de données (K1 ; K3) à transmettre sur le support (SM) dans une première file d'attente (Q1 ; Q3) et l'insertion des données de la seconde classe de données (K2 ; K4) dans une seconde file d'attente (Q2 ; Q4).

13. Réseau multipoint à point (AC1 ; AC2) permettant l'utilisation de la capacité de transmission d'un support partagé (SM) de réseau multipoint à point (AC1 ; AC2), avec lequel est prévu le support partagé (SM) pour plusieurs dispositifs de terminal (T1, T2, 3 ; STB, 5, T6) en vue de la transmission de données entre un point (BS ; ANA) dans le réseau et les dispositifs de terminal (T1, T2, 3 ; STB, 5, T6), comportant un contrôleur d'accès au support selon la revendication 9 et au moins un dispositif de terminal selon la revendication 11.
